(19) Europäisches Patentamt
European Patent Office
Office européen des brevets

(11) Veröffentlichungsnummer: **0 101 411**
**B1**

(12) # EUROPÄISCHE PATENTSCHRIFT

(45) Veröffentlichungstag der Patentschrift: **25.01.89**

(21) Anmeldenummer: **83810348.9**

(22) Anmeldetag: **05.08.83**

(51) Int. Cl.[4]: **C 08 F 291/00,** C 08 F 255/00, C 08 K 5/34 // (C08F291/00, 226:06), (C08F255/00, 226:06)

(54) **Verfahren zur chemischen Bindung von Stabilisatoren an Polymere.**

(30) Priorität: **11.08.82 CH 4810/82**

(43) Veröffentlichungstag der Anmeldung: **22.02.84 Patentblatt 84/8**

(45) Bekanntmachung des Hinweises auf die Patenterteilung: **25.01.89 Patentblatt 89/4**

(84) Benannte Vertragsstaaten: **BE DE FR GB IT NL SE**

(56) Entgegenhaltungen:
**EP-A-0 003 542**
**EP-A-0 013 682**
**EP-A-0 070 386**
**EP-A-0 082 244**
**DE-A-2 349 962**
**DE-A-2 506 105**

(73) Patentinhaber: **CIBA- GEIGY AG, Klybeckstrasse 141, CH- 4002 Basel (CH)**

(72) Erfinder: **Karrer, Friedrich, Dr., Rebbergstrasse 5, CH- 4800 Zofingen (CH)**
Erfinder: **Hofmann, Peter, Dr., Lerchenstrasse 57, CH- 4059 Basel (CH)**

**EP 0 101 411 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung betrifft ein Verfahren zur chemischen Bindung von Stabilisatoren an Polymere. Es handelt sich dabei um Stabilisatoren aus der Reihe der Polyalkylpiperidine, die vor allem als Lichtschutzmittel für Polymere von Bedeutung sind. Durch die chemische Bindung an das Polymere wird die Verflüchtigung und das Auswandern des Stabilisators unterbunden und damit seine Schutzwirkung verlängert. Die Erfindung betrifft auch neue Polyalkylpiperidinverbindungen, die für dieses Verfahren entwickelt wurden.

Es ist bekannt, dass Polyalkylpiperidinverbindungen als sterisch gehinderte Amine wertvolle Stabilisatoren für organische Polymere sind, vor allem schützen sie die Polymeren gegen Schädigung durch Lichteinwirkung. Sie haben daher als Stabilisatoren für eine Reihe von Kunststoffen industrielle Anwendung gefunden, insbesondere für die Stabilisierung von Polyolefinen, Styrol-Copolymeren, Polyamiden, Polyurethanen und diversen Lackharzen. Für ihre praktische Verwendung spielt jedoch nicht nur die Stabilisatorwirkung eine Rolle sondern es werden auch eine Reihe anderer Anforderungen gestellt wie Verträglichkeit oder Dauer der Wirkung. Die Dauer der Wirkung wird einerseits von der Stabilität des Stabilisators begrenzt, andererseits durch mögliches Auswandern, Verflüchtigen oder Extraktion aus dem Substrat. Insbesonders bei dünnschichtigen Substraten wie Folien, Fasern oder Lackfilmen sind die letzteren Prozesse massgeblich für die Wirkungsdauer eines Stabilisators. So wie bei anderen Stabilisator-Klassen hat es auch bei den Polyalkylpiperidinderivaten nicht an Versuchen gefehlt, das Auswandern, Verflüchtigen, und Extrahiertwerden aus dem Substrat zu verhindern bzw. zu verringern. Vor allem die Molekülvergrösserung durch Schaffung oligomerer oder polymerer Stabilisatoren hat hierin einen erheblichen technischen Fortschritt geschaffen.

Diese Molekülvergrösserung hat aber seine Grenzen in der Abnahme der optimalen Verteilbarkeit mit Zunahme des Polymerisationsgrades. Dies führt zu inhomogener Verteilung des Stabilisators im Substrat und damit zu sinkender Wirksamkeit. Der chemische Einbau in Substrate durch Copolymerisation erscheint als die bessere Lösung, da hierbei der Stabilisator molekular homogen verteilt ist und durch die chemische Bindung an das Substrat ein Auswandern, Verflüchtigen oder Extrahiertwerden des Stabilisators vollständig unterbunden wird. Solche copolymerisierbare Stabilisatoren müssen jedoch für jeden einzelnen Kunststoff spezifisch entwickelt werden, da hierbei die Synthese die Eigenschaften und die Anwendungsmöglichkeiten des Kunststoffes modifiziert werden. So wurde z. B. vorgeschlagen, Polyalkylpiperidinderivate, die OH- oder NH-Gruppen besitzen, in Polyurethane einzubauen (DE-OS-2 719 132) oder Polyalkylpiperidinderivate, die zwei OH-Gruppen besitzen, in aromatische Polyetherester einzubauen (US-PS-4 136 090). Eine solche Modifizierung von Polymeren durch Einbau von Stabilisator-Comonomeren ist, wie oben erklärt, nur für bestimmte Polymere möglich, nicht aber als generelle Methode und sie kann nur während der Polymersynthese durchgeführt werden.

Eine nachträgliche chemische Bindung von Stabilisatormolekülen an fertige Polymere wurde auch bereits vorgeschlagen. In der DE-OS 27 27 385 wurden Diazocarbonsäurederivate von Polyalkylpiperidinen beschrieben, die den verschiedensten Arten von organischen Polymeren zugesetzt werden können und beim Erhitzen eine chemische Pfropfreaktion mit den CH-Gruppen des Polymeren eingehen können. Dieses Verfahren hat sich jedoch in der industriellen Praxis aus verschiedenen Gründen nicht durchsetzen können. Der Hauptgrund sind die hohen Kosten und die mangelnde Stabilität solcher Diazocarbonsäurederivate.

Es wurde nunmehr eine andere Methode gefunden, mit deren Hilfe man Polyalkylpiperidin-Stabilisatoren an Polymere chemisch binden kann und welche für eine Vielzahl von Polymeren anwendbar ist. Dieses Verfahren besteht darin, dass man ein ethylenisch ungesättigtes Polyalkylpiperidinderivat in Gegenwart von freien Radikalen auf das zu stabilisierende Polymere aufpfropft. Die Radikale können dabei auf chemischem Wege durch Zusatz eines Radikalbildners erzeugt werden oder auf physikalischem Weg, insbesondere durch Bestrahlung. Es zeigte sich jedoch dabei, dass eine solche Pfropfung nicht mit allen ungesättigten Polyalkylpiperidinderivaten zufriedenstellend verläuft. Der Verlauf der Pfropfungsreaktion ist von der Struktur des verwendeten Piperidinderivates abhängig und es mussten spezielle Verbindungsklassen gesucht werden, die sich hierfür eignen und einen hohen stabilisierenden Effekt haben.

Es wurde gefunden, dass sich insbesondere ungesättigte s-Triazinderivate von 2,2,6,6-Tetramethylpiperidinen für eine solche Pfropfreaktion eignen. Gegenstand der Erfindung ist daher ein Verfahren zur chemischen Bindung von Polyalkylpiperidin-Stabilisatoren an Polymere durch Pfropfung von ethylenisch ungesättigten Polyalkylpiperidinderivaten unter Einwirkung von chemisch oder physikalisch erzeugten freien Radikalen auf das zu stabilisierende Polymere, das dadurch gekennzeichnet ist, dass man als Stabilisator eine s-Triazinverbindung verwendet, die in ihrem Molekül mindestens eine ethylenisch ungesättigte Gruppe und mindestens eine 2,2,6,6-Tetramethylpiperidingruppe enthält.

Neben dieser Pfropfung kann auch eine Vernetzung des Polymeren durch direkte Einwirkung des Radikalbildners oder der Bestrahlung auf die Polymerkette stattfinden. Eine solche radikalische Vernetzung wird in gewissen Fällen technisch durchgeführt, um dem Polymeren dadurch bestimmte Eigenschaften zu verleihen.

Setzt man bei einer solchen Vernetzungsreaktion eine s-Triazinverbindung zu, die neben mindestens einer 2,2,6,6-Tetramethylpiperidingruppe mindestens zwei ethylenisch ungesättigte Gruppen enthält, so wird die Vernetzung des Polymeren dadurch verstärkt bzw. beschleunigt. Eine solche Verbindung kann also nicht nur als chemisch bindbarer Stabilisator sondern auch als Vernetzungshilfsmittel dienen. Dadurch benötigt man geringere Mengen an Radikalbildner oder kürzere Bestrahlungszeiten.

Es zeigte sich weiterhin, dass solche Piperidin-Triazin-Stabilisatoren nicht nur ausgezeichnete

Lichtschutzmittel sind sondern auch gegen thermisch-oxidativen Abbau hervorragend stabilisieren. Es ist zwar bekannt, dass Piperidin-Lichtschutzmittel auch eine gewisse thermisch-oxydative Stabilisatorwirkung besitzen, jedoch war es überraschend, in den erfindungsgemäss verwendeten chemisch einbaubaren Stabilisatoren eine Klasse von Verbindungen gefunden zu haben, die diese thermisch-oxidative Schutzwirkung in so ausgeprägtem Masse besitzen. Man kann dadurch auf die bei der Verarbeitung von Polyolefinen üblicherweise zugesetzten Antioxydatien ganz oder teilweise verzichten.

Während sich das Verfahren prinzipiell für alle organischen Polymeren eignet, ist es vor allem für solche Polymere geeignet, die einen hohen Gehalt an $CH_2$- und $CH_3$-Gruppen haben. Von besonderer Bedeutung ist das Verfahren in seiner Anwendung zur Stabilisierung von Polyolefinen und Olefincopolymeren, insbesondere von Polypropylen, Polyethylen und chloriertem Polyethylen. Soweit man das Verfahren unter Vernetzung des Polymeren durchführt, sind als Polymere vor allem Polyethylen, chloriertes und chlorsulfoniertes Polyethylen sowie Ethylen-Vinylacetat-Copolymere von Interesse. In beiden Fällen lassen sich mit dem erfindungsgemässen Verfahren nicht nur einzelne Polymere sondern auch Polymeren-Gemische (Polyblends) stabilisieren.

Die chemische Bindung (Propfung oder Vernetzung) wird durch Radikale initiiert, die im Polymeren in Gegenwart der ungesättigten Stabilisatoren erzeugt werden. Dies kann durch Zusatz von Radikalbildnern geschehen, dies sind Verbindungen, die beim Erwärmen in Radikale zerfallen. Beispiele für bekannte Radikalbildner sind organische Peroxyverbindungen, insbesondere organische Peroxide, Peroxyester, Peroxyketale und Diacylperoxide.

Beispiele hierfür sind· Di-tert.butyl-peroxid, Dicumylperoxid, Bis-(tert.butylperoxy-isopropyl)-benzol, Dibenzoylperoxid, tert.-Butylperoxybenzoat oder 1,1-Di-tert.butyl-peroxy-3,3,5-trimethyl-cyclohexan.

Eine zweite Gruppe bekannter Radikalbildner sind die aliphatischen Azoverbindungen, wie z. B. 2-tert.Butylazo-2-methoxy-4-methylpentan, 2-tert.Butylazo-2,4-dimethylpentan, 1-tert.Butylazo-1-acetoxy-cyclohexan oder 2,2-Azobis-(2-acetoxypropan).

Eine weitere Gruppe von Radikalbildnern sind bestimmte 1,2-Diphenylalkanderivate, wie z. B. 1,2-Diphenylbernsteinsäurenitril, 1,2-Diphenyl-1,2-dicyanobernsteinsäuredialkylester oder 1,2-Diphenylethantetracarbonsäureester. Weitere bekannte Radikalbildner sind die Oximester wie z. B. das Ethyl-O-benzoyllaurylhydroximat.

Die geeigneten Radikalbildner sind bei Raumtemperatur beständig und zerfallen erst bei erhöhter Temperatur. Da die Zerfallstemperaturen der einzelnen Radikalbildner bekannt sind, hat es der Fachmann in der Hand, durch Auswahl des Radikalbildners die Temperatur der Reaktion des Stabilisators mit dem Polymeren zu steuern.

Die Radikale können aber auch durch Bestrahlung des Polymeren mit energiereicher Strahlung erzeugt werden, insbesondere durch Bestrahlung mit γ-Strahlen oder mit Elektronenstrahlen. Dies hat den Vorteil, dass im Polymeren keine Reste des Radikalbildners verbleiben und dass die Radikale direkt an der Polymerkette erzeugt werden, während bei der Verwendung von Radikalbildnern das durch den Zerfall gebildete Radikal meist erst durch eine Übertragungsreaktion - meist Wasserstoffabstraktion - auf die Polymerkette die gewünschten Polymer-Radikale erzeugt.

In denjenigen Fällen, in denen eine Vernetzung des Polymeren erwünscht ist, empfiehlt es sich als Stabilisator eine Piperidin-Triazinverbindung zu verwenden, die mindestens zwei ungesättigte Gruppen im Molekül besitzt. Hierbei kann die Vernetzung entweder nur durch das Stabilisatormolekül bewirkt sein oder es tritt sowohl direkte Vernetzung der Polymerketten unter sich als auch Vernetzung über den Stabilisator ein.

Die für das erfindungsgemässe Verfahren verwendbaren aufpfropfbaren Stabilisatoren sind s-Triazinverbindungen, die in ihrem Molekül mindestens eine 2,2,6,6-Tetramethylpiperidingruppe und mindestens eine ungesättigte Gruppe besitzen. Die ungesättigte Gruppe kann dabei über O oder N an das Triazingerüst gebunden sein oder sie kann ein Substituent am Piperidin-Stickstoff oder an einem Bindeglied zwischen dem Triazin und dem Piperidin sein. Die Verbindungen können auch mehrere s-Triazinringe enthalten oder auch oligomere Polyaminotriazine sein. Einige solcher Triazin-Polyalkylpiperidine sind beschrieben in den DE-OS-2 319 816, 2 636 130, 2 636 144 und 2 752 740 und in den EP-A-3 542, 13 665, 13 682 und 14 683; sowie in den älteren Anmeldungen EP-A-70 386 und EP-A-82 244.

Für das erfindungsgemässe Verfahren besonders geeignet sind folgende Klassen von Piperidin-Triazinverbindungen.

1. Verbindungen der allgemeinen Formel I,

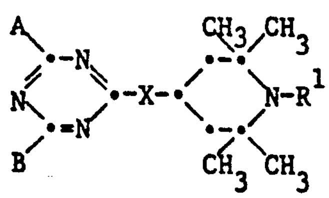

I

worin $R^1$ Wasserstoff, Oxyl-Sauerstoff, $C_1$-$C_{12}$-Alkyl, $C_3$-$C^7$-Alkenyl, $C_7$-$C_{11}$-Phenylalkyl, Cyanomethyl, $C_2$-$C_{18}$-Alkanoyl oder $C_3$-$C_{18}$-Alkenoyl, eine Gruppe -CON($R^2$)($R^3$) oder eine Gruppe -$CH_2$-CH($R_4$)-OH bedeutet, worin

$R^2$ $C_1$-$C_{12}$-Alkyl, Allyl, Cyclohexyl, Benzyl, Phenyl oder $C_7$-$C_{12}$-Alkylphenyl und

$R^3$ Wasserstoff, $C_1$-$C_{12}$-Alkyl, Allyl oder Benzyl bedeuten oder

$R^2$ und $R^3$ zusammen mit dem N-Atom, an das sie gebunden sind, einen 5- oder 6-gliedrigen heterocyclischen Ring bilden, und

$R^4$ Wasserstoff, $C_1$-$C_{12}$-Alkyl, Phenyl, $C_2$-$C_{13}$-Alkoxymethyl oder Phenoxymethyl bedeutet,

X eine zweiwertige Gruppe der Formel -O-, -N($R^5$)-, -NH-$CH_2$-$CH_2$-, -NH-$(CH_2)_2$-O-, -NH$(CH_2)_3$-O- oder -N($R^5$)-$R^7$-N($R^6$)- bedeutet, worin

$R^5$ Wasserstoff, $C_1$-$C_{12}$-Alkyl, $C_3$-$C_7$-Alkenyl, Cyclohexyl, $C_3$-$C_{12}$-Alkoxyalkyl, $C_5$-$C_{12}$-Alkenoxyalkyl, $C_4$-$C_{12}$-Dialkylaminoalkyl, eine Gruppe -$CH_2$-CH($R^4$)-OH, Benzyl, eine Gruppe der Formel

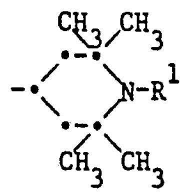

oder der Formel

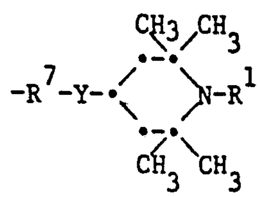

bedeutet,

$R^6$ Wasserstoff, $C_1$-$C_{12}$-Alkyl, $C_3$-$C_7$-Alkenyl, Cyclohexyl eine Gruppe -$CH_2$-CH($R^4$)-OH oder eine Gruppe der Formel

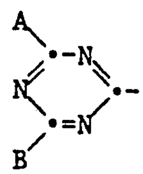

bedeutet,

$R^7$ $C_2$-$C_{12}$-Alkylen, das durch 1, 2 oder 3 der Gruppen -O- oder -N($R^6$)-unterbrochen sein kann, $C_6$-$C_{14}$-Cycloalkylen oder Cycloalkylendialkylen bedeutet,

Y eine zweiwertige Gruppe der Formel -O- oder -N($R^6$)- bedeutet und

A und B, unabhängig voneinander,

(a) eine Gruppe der Formel $R^8$O- oder ($R^9$) ($R^{10}$) N- bedeuten, worin

$R^8$ $C_1$-$C_{12}$-Alkyl, $C_3$-$C_7$-Alkenyl, $C_3$-$C_{12}$-Alkoxyalkyl, $C_4$-$C_{12}$-Dialkylaminoalkyl, Cyclohexyl, Benzyl, Phenyl oder $C_7$-$C_{12}$-Alkylphenyl bedeutet,

$R^9$ $C_1$-$C_{12}$-Alkyl, $C_3$-$C_7$-Alkenyl, $C_5$-$C_8$-Cycloalkyl, $C_3$-$C_{12}$-Alkoxyalkyl, $C_5$-$C_{12}$-Alkenoxyalkyl, $C_4$-$C_{12}$-Dialkylaminoalkyl, eine Gruppe -$CH_2$-CH($R^4$)-OH, Phenyl, $C_7$-$C_{12}$-Alkylphenyl oder $C_7$-$C_{11}$-Phenylalkyl bedeutet und

$R^{10}$ Wasserstoff, $C_1$-$C_{12}$-Alkyl, $C_3$-$C_7$-Alkenyl, $C_5$-$C_8$-Cycloalkyl, $C_3$-$C_{12}$-Alkoxyalkyl, $C_5$-$C_{12}$-Alkenoxyalkyl, $C_4$-$C_{12}$-Dialkylaminoalkyl, $C_2$-$C_{12}$-Alkanoyl, $C_3$-$C_{12}$-Alkenoyl, eine Gruppe -$CH_2$-CH($R^4$)-OH oder $C_7$-$C_{11}$-Phenylalkyl bedeutet, oder $R^9$ und $R^{10}$ zusammen mit dem N-Atom, an das sie gebunden sind, einen 5- oder 6-gliedrigen heterocyclischen Ring bilden, oder (b) eine Gruppe der Formel

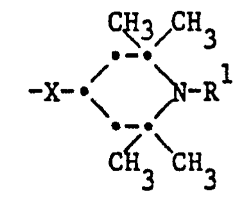

bedeuten,

wobei mindestens eine der Gruppen $R^1$, $R^2$, $R^3$, $R^5$, $R^6$, $R^8$, $R^9$ oder $R^{10}$ einen Alkenyl- oder Alkenoylrest darstellt.

Die Substituenten $R^1$, R2, $R^4$, $R^5$, $R^6$, $R^8$, $R^9$ und $R^{10}$ als Alkyl können unverzweigtes oder verzweigtes Alkyl sein, vorzugsweise unverzweigtes. Beispiele für solche Alkylgruppen sind Methyl, Ethyl, Propyl, Butyl, sec. Butyl, n-Hexyl, n-Octyl, 2-Ethylhexyl, n-Decyl oder n-Dodecyl.

$R^1$, $R^5$, $R^6$, $R^8$ und $R^9$ als Alkenyl können unverzweigtes oder verzweigtes Alkenyl bedeuten, wie z. B. Allyl, Methallyl, 2-Butenyl-1, 2-Methyl-2-butenyl-1 oder 2-Hexenyl-1, wobei Allyl bevorzugt ist.

$R^9$ als Cycloalkyl kann z. B. Cyclopentyl, Cyclohexyl, 4-Methylcyclohexyl, Cycloheptyl oder Cyclooctyl sein, wobei Cyclohexyl bevorzugt ist.

$R^1$, $R^9$ und $R^{10}$ als Phenylalkyl können z. B. Butyl, 1-Phenylethyl, 2-Phenylethyl, 3-Phenylpropyl oder 3-Phenylbutyl sein, wobei Benzyl bevorzugt ist.

$R^2$, $R^8$ und $R^9$ als Alkylphenyl können z. B. 4-Tolyl, 2-Tolyl, 3 5-Dimethylphenyl, 4-Ethylphenyl oder 4-Isopropylphenyl sein, wobei 4-Tolyl bevorzugt ist.

$R^1$ als Alkanoyl kann z. B. Acetyl, Propionyl, Butyryl, Hexanoyl (Capronyl), 2-Ethylhexanoyl, n-Octanoyl (Capryloyl), n-Decanoyl (Caprinoyl), n-Dodecanoyl (Lauroyl), n-Hexadecanoyl (Palmitoyl) oder n-Octadecanoyl (Stearoyl) sein. $R^1$ als Alkenoyl kann z. B. Acryloyl, Methacryloyl, Crotonyl, Vinylacetyl oder Oleyl sein.

$R^4$ als Alkoxymethyl kann z. B. Methoxy-, Ethoxy-, Butoxy-, Hexyloxy-, Octyloxy- oder Dodecycloxymethyl sein.

$R^5$, $R^8$, $R^9$und $R^{10}$ als Alkoxyalkyl können z. B. 2-Methoxyethyl, 2-Ethoxyethyl, 2-Isopropoxyethyl, 2-Butoxyethyl 2-Methoxypropyl, 4-Methoxybutyl, 3-Butoxypropyl oder 2-Octyloxyethyl sein. $R^5$ und $R^9$ als Alkenoxyalkyl können z. B. 2-Allyloxyethyl, 2-Methallyloxypropyl oder 3-Allyloxypropyl sein.

$R^5$, $R^8$, $R^9$ und $R^{10}$ als Dialkylaminoalkyl kann insbesondere Dialkylaminopropyl sein wie z. B. 3-Dimethylamino-, 3-Diethylamino- oder 3-Diiso-propylaminopropyl.

$R^7$ als Alkylen oder durch -O- oder -N($R^6$)- unterbrochenes Alkylen kann z. B. 1,2-Ethylen, 1,3-Propylen, 1,4-Butylen, 1,6-Hexylen, 1,8-Octylen 2,4-Dimethyl-1,6-hexylen, 1,12-Dodecylen, 4-Oxaheptylen-1,7, 4-(Methylaza)-heptylen-1,7 oder 4,8-Diazaundecylen-1,11 sein.

$R^7$ als Cycloalkylen oder Cycloalkylen-dialkylen kann z. B. 1,4-Cyclo-hexylen, 1,5-Cyclooctylen, 1,4-Dimethylencyclohexan oder 3,3-Dimethyl-5-methylencyclohexyl sein.

$R^2$ und $R^3$ sowie $R^9$ und $R^{10}$ können zusammen mit dem N-Atom, an das sie gebunden sind, einen heterocyclischen Ring bilden, wie z. B. einen Pyrrolidin-, Piperidin-, Morpholin- oder 4-Methylpiperazinring.

Unter den Verbindungen der Formel I sind bevorzugt:

1a) Verbindungen der Formel I, worin mindestens zwei der Gruppen $R^1$, $R^2$, $R^3$, $R^5$, $R^6$, $R^8$ $R^9$ oder $R^{10}$ Alkenyl oder Alkenoyl sind.

1b) Verbindungen der Formel I, worin der Substituent A oder die Substituenten A und B eine Gruppe $R^8$O- oder ($R^9$)($R^{10}$)N- bedeuten und $R^8$ und $R^9$ $C_3$-$C_7$-Alkenyl sind.

1c) Verbindungen der Formel I, worin A und B eine Gruppe der Formel $R^8$O- oder ($R^9$)($R^{10}$)N- bedeuten $R^8$ und $R^9$ Allyl sind.

1d) Verbindungen der Formel I, worin A eine Gruppe ($R^{9'}$)($R^{10'}$)N- ist, worin $R^{9'}$ $C_3$-$C_7$-Alkenyl und $R^{10'}$ $C_1$-$C_{12}$-Alkyl, Cyclohexyl, Hydroxyethyl, Benzyl, $C_2$-$C_{12}$-Alkanoyl oder $C_3$-$C_5$-Alkenoyl bedeuten.

1e) Verbindungen der Formel I, worin die Substituenten A und B eine gruppe $R^8$O- oder ($R^9$)($R^{10}$)N-bedeuten, worin $R^8$ und $R^9$ Allyl sind, und X eine Gruppe -N($R^5$)- ist, worin $R^5$ eine Gruppe der Formel

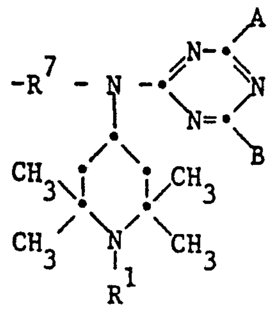

bedeutet und $R^1$ und $R^7$ die oben angegebene Bedeutung haben.

1f) Verbindungen der Formel I, worin $R^1$ $C_3$-$C_7$-Alkenyl, $C_7$-$C_{11}$-Phenylalkyl, Cyanomethyl, $C_2$-$C_{18}$-Alkanoyl, $C_3$-$C_{18}$-Alkenoyl oder -CON($R^2$)($R^3$) bedeutet.

2. Eine weitere besonders geeignete Klasse von Piperidin-Triazinen sind die Verbindungen der allgemeinen Formel II,

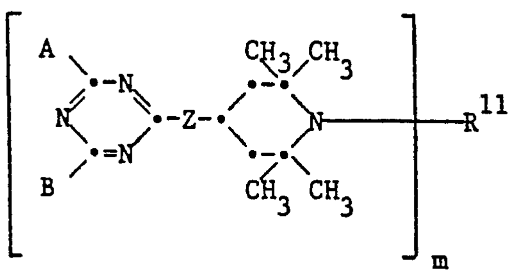

II

worin m 2, 3 oder 4 ist,

$R^{11}$ ein m-wertiger Rest ist und $C_2$-$C_{12}$ -Alkylen, $C_4$-$C_8$-Alkenylen, Xylylen oder eine Gruppe -$CH_2$-CH(OH)-$CH_2$-, -$CH_2$-CH(OH)-$CH_2$-D-$CH_2$-, -CH(OH)-$CH_2$-, -[-$CH_2$-CH(OH)-$CH_2$-]-$_3$T oder -[-$CH_2$-CH(OH)-$CH_2$-]-$_4$Q ist, wobei D einen Rest -O-$R^{12}$-O- oder -OOC-$R^{13}$COO- bedeutet, worin $R^{12}$ und $R^{13}$ zweiwertige aliphatische, cycloaliphatische, aromatische oder araliphatische Reste bedeuten,

T eine dreiwertige aliphatische oder heterocyclische Gruppe bedeutet

und Q eine vierwertige aliphatische Gruppe bedeutet,

Z eine zweiwertige Gruppe der Formel -O-, oder -N($R^{14}$)- ist, worin $R^{14}$ Wasserstoff, $C_1$-$C_{12}$-Alkyl, $C_3$-$C_7$-Alkenyl, Cyclohexyl, $C_2$-$C_4$-Hydroxyalkyl, $C_3$-$C_{12}$-Alkoxyalkyl, $C_5$-$C_{12}$-Alkenoxyalkyl, $C_4$-$C_{12}$-Dialkylaminoalkyl, oder Benzyl ist,

und A und B die für Formel I gegebene Bedeutung haben, wobei das Molekül mindestens eine Alkenyl- oder Alkenoylgruppe enthält.

Darin kann $R^{11}$ als Alkylen z. B. 1,2-Ethylen, 1,4-Butylen, 1,6-Hexylen oder 1,12-Dodecylen sein. $R^{11}$ als Alkenylen kann insbesondere 2-Butenylen-1,4 sein.

D als Rest -O-$R^{12}$-O- ist der zweiwertige Rest eines Diols wie z. B. von Ethylenglykol, 1,2-Propylenglykol, 1,4-Butandiol, 1,4-Butendiol, Diethylenglykol, 1,6-Hexandiol, Cyclohexan-1,4-diol, Hydrochinon, 4,4'-Dihydroxydiphenyl, 2,2-Diphenylolpropan, Diphenylolmethan, Xylylendiol oder 1,4-Dimethylolcyclohexan, wobei der Rest des 2,2-Diphenylolpropans bevorzugt ist. D als Rest -OOC-$R^{13}$-COO ist der zweiwertige Rest einer Dicarbonsäure, wie z. B. von Bernstein-, Adipin-, Malein-, Sebacin-, Phthal-, Isophthal-, Terephthal- oder Hexahydrophthalsäure.

T als dreiwertige Gruppe kann z. B. der dreiwertige Rest von Glycerin, Trimethylolpropan, Trimethylolethan oder Isocyanursäure sein.

Q kann insbesondere der vierwertige Rest von Pentaerythrit, $C(CH_2O-)_4$, sein.

$R^{14}$ als Alkyl, Alkenyl, Alkoxyalkyl, Alkenoxyalkyl oder Dialkylaminoalkyl kann die Bedeutungen haben, wie sie für $R^5$ gegeben wurden. $R^{14}$ als Hydroxyalkyl kann z. B. 2-Hydroxyethyl, 2-Hydroxypropyl oder 2-Hydroxybutyl sein.

Unter den Verbindungen der Formel II sind bevorzugt:

2a) Verbindungen, die mindestens zwei Alkenyl- oder Alkenoylgruppen enthalten,

2b) Verbindungen der Formel II, worin A eine Gruppe der Formel $R^8$O-oder ($R^9$)($R^{10}$)N- bedeutet, worin $R^8$ und $R^9$ eine $C_3$-$C_7$-Alkenylgruppe sind und $R^{10}$ eine der oben gegebenen Bedeutungen hat,

2c) Verbindungen der Formel II, worin A und B eine Gruppe der Formel $R^8$O- oder ($R^9$)($R^{10}$)N- bedeuten und $R^8$ und $R^9$ Allyl sind.

3. Eine weitere besonders geeignete Klasse von Piperidin-Triazinverbindungen sind Verbindungen der Formel III,

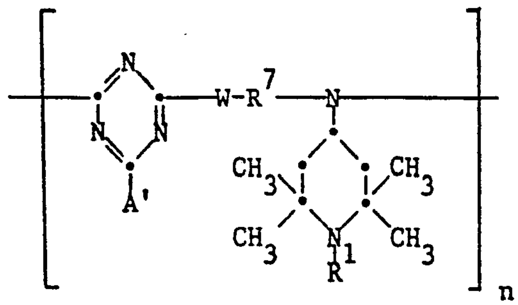

III

worin n ein Wert von 2 bis 20 ist,

A' eine Gruppe der Formel $R^8$ O- oder $(R^9)(R^{10})N$- ist, worin $R^8$ und $R^9$ $C_3$-$C_7$-Alkenyl bedeuten,

W eine zweiwertige Gruppe der Formel -O- oder -$N(R^{16})$ - ist, worin $R^{16}$ Wasserstoff, $C_1$-$C_{12}$-Alkyl, $C_3$-$C_7$-Alkenyl, Cyclohexyl, Benzyl oder eine Gruppe der Formel

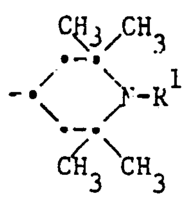

bedeutet,

und $R^1$, $R^7$ und $R^{10}$ die oben gegebene Bedeutung haben.

$R^{16}$ als Alkenyl kann darin z. B. Allyl, Methallyl, 2-Butenyl, 2-Methyl-2-butenyl-1 oder 2-Hexenyl-1 sein, wobei Allyl bevorzugt ist. $R^{16}$ als Alkyl kann die Bedeutungen haben, wie sie für $R^6$ gegeben wurden.

Die oligomeren Verbindungen der Formel III können lineare oder cyclische Oligomere sein. Beispiele für cyclische Oligomere sind die Cyclodimeren der Formel IIIA

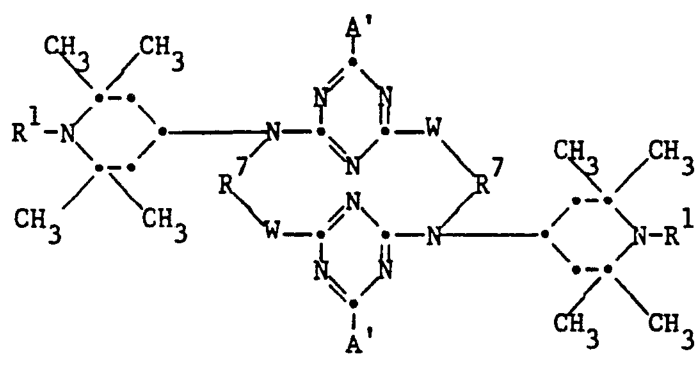

IIIA .

Auch Gemische von linearen und cyclischen Oligomeren der Formel III sind brauchbar.

3a.) Unter den Verbindungen der Formel III sind solche bevorzugt, worin A' eine Allylamino- oder Diallylaminogruppe ist.

4. Eine weitere besonders geeignete Klasse von Piperidin-Triazinverbindungen sind Verbindungen der Formel IV

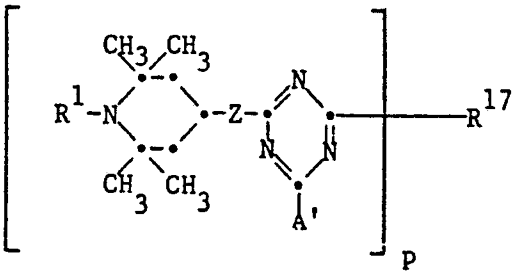

IV

worin $R^1$ dieselbe Bedeutung wie in Formel I hat, Z dieselbe Bedeutung wie in Formel II hat, A' die in Formel III gegebene Bedeutung hat, p 2, 3 oder 4 ist und $R^{17}$ der p-wertige Rest eines Polyols oder eines Polyamins ist.

$R^{17}$ als zweiwertiger Rest kann der Rest eines Diols oder eines Diamins sein wie z. B. von Ethylenglykol, 1,2-Propylengylkol, 1,4-Butandiol, 1,4-Butendiol, Diethylenglykol, 1,6-Hexandiol, Hydrochinon, 2,2-Diphenylolpropan, Diphenylolmethan, Xylylendiol, 1,4-Dimethylolcyclohexan, Ethylendiamin, 1,3-Diaminopropan, Tetramethylen-, Hexamethylen-, Octamethylendiamin, 1,3-Diaminocyclohexan, 4,4'-Diaminodiphenyl, 4,4'-Diaminodiphenylmethan oder 1,7-Diamino-4-oxaheptan.

$R^{17}$ als dreiwertiger Rest kann der Rest eines Tiols oder eines Triamins sein, wie z. B. von Glycerin, Trimethylolpropan, Triethanolamin, Diethylentriamin oder Dipropylentriamin.

$R^{17}$ als vierwertiger Rest kann der Rest eines Tetrols oder eines Tetramins sein, wie z. B. von Pentaerythrit oder Triethylentetramin.

4a) Unter den Verbindungen der Formel IV sind solche bevorzugt, worin der Substituent A' eine Allyloxy-, Allylamino- oder Diallylaminogruppe ist.

4b) Bevorzugt sind weiterhin Verbindungen der Formel IV, worin A' eine Gruppe $(R^9)(R^{10})N$- ist und $R^{10}$ $C_1$-$C_{12}$-Alkyl, Cyclohexyl, Hydroxyethyl, Benzyl, $C_2$-$C_{12}$-Alkanoyl oder $C_3$-$C_5$-Alkenoyl ist.

4c) Bevorzugt sind weiterhin Verbindungen der Formel IV, worin $R^1$ $C_3$-$C_7$-Alkenyl, $C_7$-$C_{11}$-Phenylalkyl, Cyanomethyl, $C_2$-$C_{18}$-Alkanoyl, $C_3$-$C_{18}$-Alkenoyl oder -CON$(R^2)(R^3)$ bedeutet.

Die Verbindungen der Klassen 1d, 1f, 2, 3, 4b und 4c sind neue Verbindungen und als solche auch Gegenstand der Erfindung. Die Herstellung der Verbindungen der Klassen 1d und 1f (Formel I) kann in Analogie zum Verfahren der DE-OS-2 319 816 erfolgen. Hierbei wird Cyanursäurechlorid stufenweise mit den Komponenten AH, BH und einem 4-Hydroxy- oder 4-Amino-2,2,6,6-tetramethylpiperidin umgesetzt. Die Einführung eines Substituenten $R^1$ an den Piperidin-Stickstoff kann vor oder nach der Umsetzung mit dem Halogentriazin erfolgen.

Die Verbindungen der Klasse 2 (Formel II) können nach den in der EP-A-3 542 angegebenen allgemeinen Methoden hergestellt werden. Hierbei wird der Rest $R^{11}$ mittels einer Di-, Tri- oder Tetrahalogen- oder epoxidverbindung eingeführt.

Die Verbindungen der Klasse 3 (Formel III) können nach dem Verfahren der DE-OS-2 636 144 hergestellt werden. Hierbei wird Cyanursäurechlorid zuerst mit 1 Mol einer Verbindung A'H und anschliessend mit 1 Mol einer difunktionellen Piperidinverbindung umgesetzt. Durch Verwendung eines Überschusses der difunktionellen Komponente kann man den Polymerisationsgrad n niedrig halten.

Die Verbindungen der Klassen 4b und 4c (Formel IV) können nach der Methode der DE-OS-2 636 130 hergestellt werden. Hierbei wird Cyanursäurechlorid stufenweise mit einer Verbindung A'H, mit einem 4-Hydroxy- oder 4-Aminopiperidinderivat und mit einem Polyol oder Polyamin $R^{17}(H)_p$ umgesetzt. Das Molverhältnis Triazin : Polyol oder Polyamin beträgt dabei p : 1. Weitere Details zur Herstellung dieser Verbindungen können den später folgenden Herstellungsbeispielen entnommen werden.

Die Piperidin-Triazinverbindungen werden den Polymeren in einer Menge von 0,01 bis 5 Gew.-%, vorzugsweise von 0,1 bis 1 Gew.-%, zugesetzt.

Der Zusatz erfolgt vor der Formgebung des Polymeren, vorzugsweise durch trockenes Vermischen mit dem Polymer-Pulver bzw. Polymer-Granulat. Die Piperidin-Triazinverbindung kann auch als Masterbatch zum Polymeren zugesetzt werden. Der Radikalbildner kann gleichzeitig mit dem Stabilisator zugemischt werden, er kann aber auch direkt in die Polymer-Schmelze zugegeben werden. Gleichzeitig mit dem Piperidin-Triazin-Stabilisator können auch andere Stabilisatoren oder sonstige Additive zugegeben werden, beispielsweise Antioxydantien, Metalldesaktivatoren, Phosphite, UV-Absorber, Metallcarboxylate, Gleitmittel, Antistatika, Flammschutzmittel, Pigmente, Füllstoffe oder Verstärkungsstoffe. Von Bedeutung ist vor allem die zusätzliche Verwendung von phenolischen Antioxydantien, insbesondere von Derivaten der β-(3,5-Di-t-butyl-4-hydroxyphenyl)-propionsäure wie z. B. deren Octadecylester oder Pentaerythritylester. Auch der Zusatz von oligomerisierten Dihydrochinolinderivaten wie z. B. dem Oligomeren von Trimethyldihydrochinolin, steigert die Alterungsbeständigkeit der Polymeren. Wenn eine Vernetzung des Polymeren beabsichtigt ist, kann man auch Vernetzungshilfsmittel zusetzen, wie z. B. Triallylcyanurat, Diallylterephthalat, Triallyltrimellithat, Ethylenglykoldiacrylat oder Trimethylolpropan-trimethacrylat.

Arbeitet man in Gegenwart eines Radikalbildners, so geschieht die Pfropfung oder Vernetzung durch Erhitzen des Polymeren auf eine Temperatur, bei welcher der Radikalbildner genügend rasch zerfällt. In bestimmten Fällen kann es erwünscht sein, gleichzeitig mit der Pfropfung eine gewisse Reduktion des

Molekulargewichtes des Polymeren zu bewirken. Eine solche kann bei darauf ansprechenden Polymeren durch entsprechende Auswahl und Dosierung des Radikalbildners und durch geeignete Temperaturführung erreicht werden.

Geschieht die Pfropfung oder Vernetzung durch Bestrahlung, so erfolgt diese vorzugsweise bei Raumtemperatur und nach der Formgebung des Polymeren.

Es existieren verschiedene technische Verfahren zur kontinuierlichen Vernetzung von Kunststoffartikeln, wie z. B. von Kabelisolierungen, Rohren oder Folien. Alle diese Verfahren sind auch für das erfindungsgemässe Verfahren geeignet.

Es ist bekannt, dass bei solchen radikalischen Vernetzungsreaktionen durch gleichzeitige Nebenreaktionen eine unerwünschte Blasenbildung im Polymeren auftreten kann. Die erfindungsgemässen Stabilisatoren vermindern diese Nebenreaktionen und damit die Blasenbildung.

Der Zusatz der Piperidin-Triazinderivate zur Vernetzung von Polymeren bewirkt nicht nur eine dauerhafte Stabilisierung des Polymeren sondern ermöglicht auch eine Reduktion der benötigten Menge an Radikalbildner. Insgesamt ist das erfindungsgemässe Verfahren für vernetzbare Thermoplaste besonders geeignet und von besonderer Bedeutung.

Die nach dem erfindungsgemässen Verfahren stabilisierten Polymeren zeigen eine hohe Beständigkeit gegen photochemischem Abbau. Dies war aus dem Gehalt der Stabilisatoren an Tetralkylpiperidingruppen zu erwarten. Überraschenderweise zeigen die so stabilisierten Polymeren aber auch eine hohe thermisch-oxidative Stabilität, wie sie sonst nur durch Zusatz von Antioxidantien erreicht werden kann. In Einzelfällen wird die Wirkung der handelsüblichen Antioxidantien sogar übertroffen.

Die folgenden Beispiele erläutern das erfindungsgemässe Verfahren näher ohne dieses auf die Beispiele zu beschränken und beschreiben die Herstellung einzelner hierfür brauchbarer Stabilisatoren. Alle Temperaturangaben beziehen sich dabei auf Celsius-Grade.

**Herstellung der Stabilisatoren**

**Beispiel 1:**

a) Eine Lösung von 198,8 g (0,5 Mol) N,N'-Bis(2,2,6,6-tetramethyl-piperidyl-4)-hexamethylendiamin in 500 ml Aceton wird innerhalb 2 1/2 Std. unter Rühren zu einer Lösung von 184,4 g (1 Mol) Cyanursäurechlorid in 1 l Aceton zugetropft. Die Temperatur wird dabei auf 0 bis 5°C gehalten. Nach dem Zutropfen wird 4 Stunden bei dieser Temperatur nachgerührt. Dann wird eine Lösung von 40 g NaOH in 160 ml Wasser unter Eiskühlung zugegeben und weitere 15 Minuten gerührt. Die neutralisierte Reaktionslösung wird auf 1 l Eiswasser gegossen und das ausgefallene Produkt abfiltriert und im Exsiccator getrocknet. Man erhält 347 g der Tetrachlorverbindung der Formel

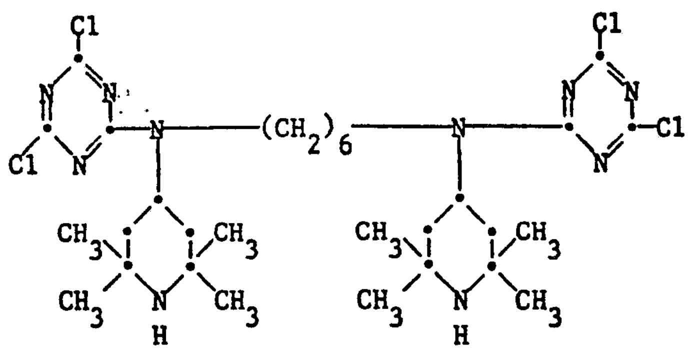

die bei 138 - 40°C schmilzt,

Analyse: $C_{30}H_{48}N_{10}Cl_4$ (690,6) Cl ber. 20,56 % gef. 20,53 %.

b) Eine Mischung von 27,6 g (0,04 Mol) des obigen Tetrachlorides und 60 g (1,05 Mol) Allylamin werden in einem Autoklaven unter Rühren 24 Stunden auf 130°C erwärmt, wobei sich ein Druck von 7 bar einstellt. Nach dem Erkalten wird das überschüssige Allylamin im Vakuum abdestilliert, der Rückstand in 300 ml Chloroform aufgenommen und die trübe Lösung einmal mit 100 ml 20 %-iger Natronlauge und dreimal mit 50 ml Wasser gewaschen. Die nunmehr klare Lösung wird über $Na_2SO_4$ getrocknet und eingedampft. Das als Rückstand erhaltene Rohprodukt (25 g) kristallisiert beim Stehen. Zur Reinigung wird es in 250 ml Ligroin (Kp 110 - 140°) heiss gelöst und die Lösung mit 4 g Kieselgel verrührt und heiss filtriert. Das beim Abkühlen kristallisierende Produkt wird abfiltriert und im Vakuum bei 60° getrocknet. Das erhaltene N,N'-Bis[2,4-di(allylamino)-1,3,5-triazinyl-6]-N,N'-bis-(2,2,6,6-tetramethylpiperidyl-4)-hexamethylendiamin der Formel

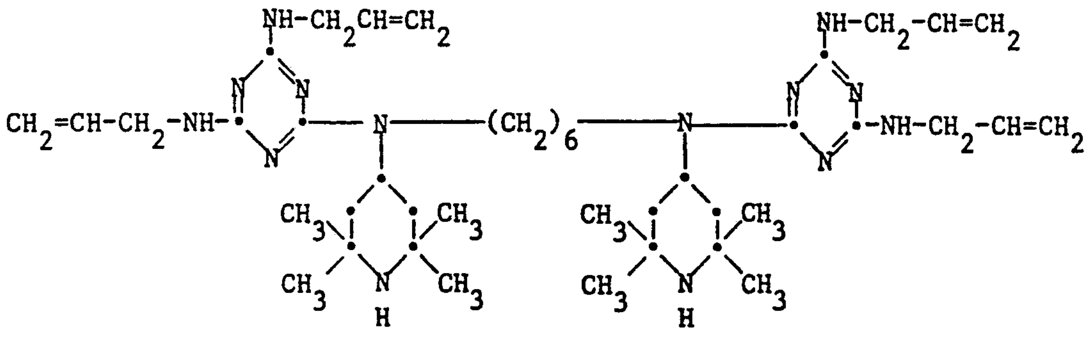

schmilzt bei 162 - 63° (Stabilisator Nr. 1)

Analyse: $C_{42}H_{72}N_{14}$ (773,14)
Ber: C 65,25 % H 9,39 % N 25,36 %
Gef: C 65,4 % H 9,4 % N 25,5 %

In analoger Weise werden hergestellt:

2,4-Bis[N-(2,2,6,6-tetramethylpiperidyl-4)-butylamino]-6-allylamino-1,3,5-triazin, Fp. 101 - 103° (Stabilisator Nr. 2),

N,N'-Bis[2,4-bis(diallylamino)-1,3,5-triazinyl-6]-N,N'-bis(2,2,6,6-tetramethylpiperidyl-4)-hexamethylendiamin, Fp. 124 - 125° (Stabilisator Nr. 3),

2,4-Bis(diallylamino)-6-[N-(2,2,6,6-tetramethylpiperidyl-4)-butylamino]-1,3,5-triazin, viskoses Öl, Kp 230°/0,1 Pa (Stabilisator Nr. 4),

N,N'-Bis[2,4-di(allyloxy)-1,3,5-triazinyl-6]-N,N'-bis(2,2,6,6-tetramethylpiperidyl-4)-hexamethylendiamin, Fp. 112 - 113° (Stabilisator Nr. 5).

2-Di(2,2,6,6-tetramethylpiperidyl-4)-amino-4,6-di-allylamino-1,3,5-triazin Fp. 74 - 75° (Stabilisator Nr. 6), sowie die Verbindung der Formel

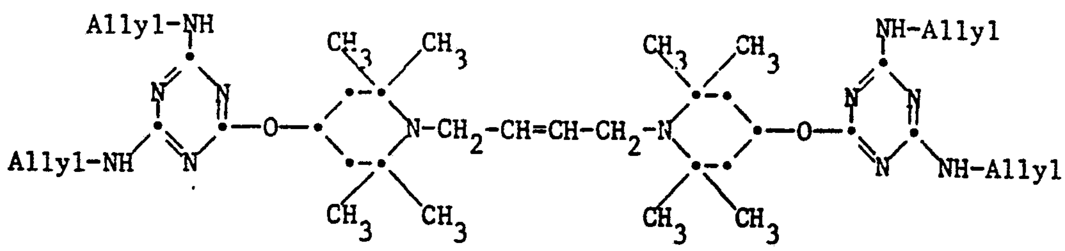

Fp. 239 - 240° (Stabilisator Nr. 7).

**Beispiel 2:**

Zu einer klaren Lösung von 73,8 g (0,4 Mol) Cyanurchlorid in 500 ml Toluol tropft man unter Rühren in 1,5 Std. 54,9 g (0,96 Mol) Allylamin, wobei die Temperatur durch leichte Aussenkühlung des Reaktionsgefässes zwischen 20 und 30° gehalten wird. Nach weiteren zwei Std. Rühren bei Raumtemperatur und einer Std. bei 50° wird auf 20° gekühlt und innert 2 Std. bei 20° die Lösung von 16 g (0,4 Mol) Natriumhydroxid in 70 ml Wasser zugetropft. Nach weiteren 2 Std. Rühren bei Raumtemperatur und 6 Std. bei 60° werden nochmals 16 g (0,4 Mol) Natriumhydroxid in 70 ml Wasser innert 2 Std. zugetropft und 5 Std. bei 60° nachgerührt. Nach dem Abkühlen auf Raumtemperatur werden 200 ml Wasser zugefügt und nach ca. 30 Min. Rühren wird der Niederschlag abfiltriert. Der Niederschlag wird gründlich mit Wasser ausgewaschen, gut abgesaugt und im Vakuum bei ca. 95° getrocknet. Das so erhaltene farblose 2,4-Bis-allylamino-6-chlor-1,3,5-triazin ist analysenrein und besitzt einen Fp. von 205 - 206°; sein Wassergehalt ist < 0,3 %.

Ausbeute 88,2 g (97,7 % d.Th.)

Analyse:

| | | | | | |
|---|---|---|---|---|---|
| $C_9H_{12}N_5Cl$ | Ber.: | C 47,90 | H 5,36 | N 31,03 | Cl 15,70 % |
| (225,7) | Gef.: | C 47,9 | H 5,5 | N 31,3 | Cl 15,6 % |

In analoger Weise werden hergestellt:

2-Allylamino-4-[N-(2,2,6,6-tetramethylpiperidyl-4)-butylamino]-6-chlor-1,3,5-triazin, Fp. 143 - 144°,

2-Allylamino-4-[N-(2,2,6,6-tetramethylpiperidyl-4)-octylamino]-6-chlor-1,3,5-triazin, Fp. ~ 50°,

2,4-Bis[N-(2,2,6,6-tetramethylpiperidyl-4)-butylamino]-6-chlor-1,3,5-triazin, Fp. 117 - 118°,
2,4-Bis(diallylamino)-6-chlor-1,3,5-triazin, $Kp_{0,01}$ 155°,
2-Diallylamino-4-[N(2,2,6,6-tetramethylpiperidyl-4)-butylamino]-6-chlor-1,3,5-triazin, $Kp_{0,06}$ 210°.

46,5 g (0,206 Mol) 2,4-Bis-allylamino-6-chlor-1,3,5-triazin und 39,5 g (0,1 Mol) N,N'-Bis-(2,2,6,6-tetramethylpiperidin yl-4-hexamethylendiamin werden in 200 ml Xylol in einer Stickstoffatmosphäre unter Rühren rasch erwärmt, wobei vorerst eine klare Lösung entsteht. Nach ca. 10 - 15 Min. beginnt sich ein Niederschlag der Hydrochloride zu bilden. Bei Rückflusstemperatur wird 2,5 Std. weitergerührt. Nun werden in 5 Portionen innerhalb von 5 Std. insgesamt 8,8 g (0,22 Mol) fein pulverisiertes, festes Natriumhydroxid zugefügt und weitere 10 Std. bei Rückflusstemperatur weitergerührt. Zur Aufarbeitung wird das heisse Reaktionsgemisch (ca. 125°) durch eine vorgewärmte Nutsche filtriert, mit wenig warmem Xylol nachgewaschen und das Filtrat unter Rühren und Kühlen (0 - 5°) zur Kristallisation gebracht. Der kristalline Niederschlag wird abfiltriert und in Siedegrenzenbenzin (Sdp. 110 - 140°) umkristallisiert, wodurch das N,N'-Bis-[2,4-di(allylamino)-1,3,5-triazin-yl-6]-N,N'-bis-(2,2,6,6-tetramethylpiperidinyl-4)-hexamethylendiamin vom Smp. 161 - 163° erhalten wird. Dieses Produkt ist identisch mit dem nach Beispiel 1b) hergestellten Produkt. (Stabilisator Nr. 1).

In analoger Weise werden hergestellt:
N,N'-Bis-[2,4-di(allylamino)-1,3,5-triazinyl-6]-N,N'-bis-(2,2,6,6-tetramethylpiperidinyl-4)-1,2-diaminoethan, Fp. 211 - 212° (Stabilisator Nr. 8),
sowie die Verbindungen der Formeln

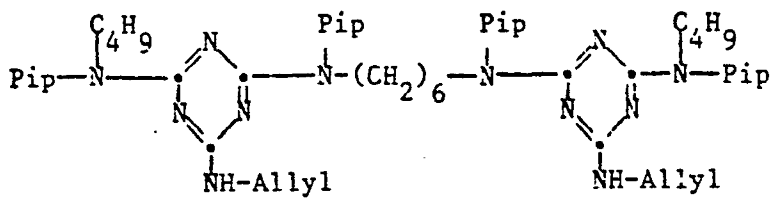

Fp. 198 - 200° (Stabilisator Nr. 9),

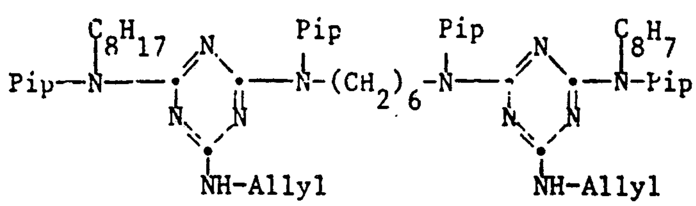

Fp. 117 - 119° (Stabilisator Nr. 10),

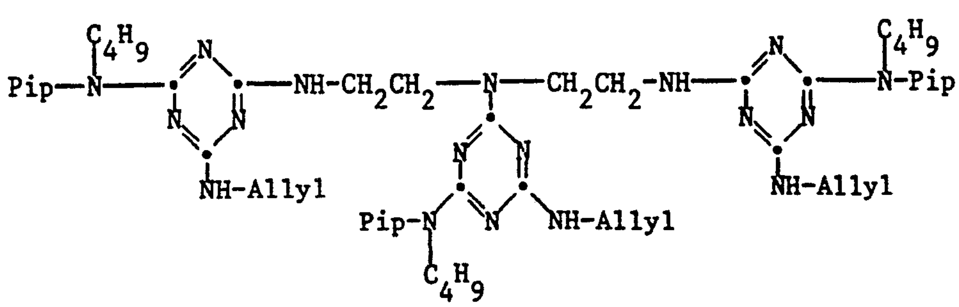

Fp. ca. 102° (Stabilisator Nr. 11),

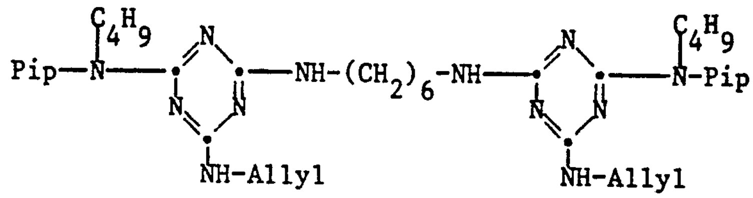

Fp. 130 - 131 (Stabilisator Nr. 12),

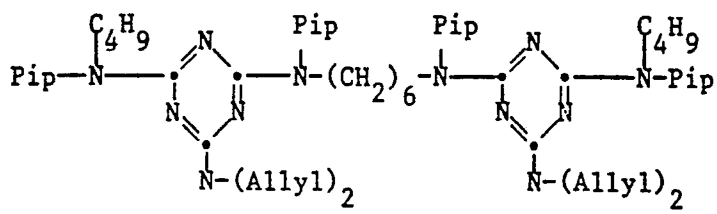

Fp. 151 - 159° (Stabilisator Nr. 13).
In diesen Formeln bedeutet Pip einen 2,2,6,6-Tetramethylpiperidyl-4-Rest.

**Beispiel 3:**

18,05 g (0,08 Mol) 2,4-Bis-allylamino-6-chlor-1,3,5-triazin und 14,74 g (0,08 Mol) 2-(2,2,6,6-Tetramethyl-piperidinyl-4)-ethylamin werden in 130 ml Xylol unter Rühren 4 Std. auf Rückflusstemperatur erhitzt. Anschliessend werden 3,5 g (0,088 Mol) fein pulverisiertes Natriumhydroxid in 4 Portionen über eine Zeitspanne von 4 Std. dem Reaktionsgemisch beigefügt und das Gemisch über Nacht weiter auf Rückflusstemperatur gehalten. Hierauf wird das Reaktionsgemisch heiss vom ausgefallenen Natriumchlorid abfiltriert, das Xylol im Vakuum vollständig abdestilliert und der Rückstand in n-Pentan umkristallisiert. Das so erhaltene 2,4-Bis-allylamino-6-[2-(2,2,6,6-tetramethyl-piperidinyl-4)-ethylamino]-1,3,5-triazin besitzt einen Smp. von 74 - 75° (Stabilisator Nr. 14)
Analyse:

| | | | | |
|---|---|---|---|---|
| $C_{20}H_{35}N_7$ | Ber.: | C 64,31 | H 9,44 | N 26,25 % |
| (373,55) | Gef.: | C 64,3 | H 9,6 | N 26,0 % |

Analog werden hergestellt:
2,4-Bis-allylamino-6-[N-(2,2,6,6-tetramethylpiperidinyl-4)-butylamino]-1,3.5-triazin, $Kp_{0,01}$ 215° (Stabilisator Nr. 15),
2,4-Bis-allylamino-6-(2,2,6,6-tetramethylpiperidyl-4-amino)-1,3,5-triazin, Fp. 87 - 89° (Stabilisator Nr. 16),
2-Diallylamino-4,6-bis[N-(2,2,6,6-tetramethylpiperidyl-4)-butylamino]-1,3,5-triazin, Fp. 98 - 100° (Stabilisator 17),
2-Diallylamino-4,6-bis(2,2,6,6-tetramethylpiperidyl-4-amino)-1,3,5-triazin, Fp. 97 - 98° (Stabilisator 18),
2-Diallylamino-4,6-bis[N-(2,2,6,6-tetramethylpiperidyl-4)-methylamino]-1,3,5-triazin, Fp. 92 - 93° (Stabilisator Nr. 19),
2-Diallylamino-4,6-bis[N-(2,2,6,6-tetramethylpiperidyl-4)-ethylamino]-1,3,5-triazin, Fp. 129 - 130° (Stabilisator Nr. 20),
2-Diallylamino-4,6-bis(N-(2,2,6,6-tetramethylpiperidyl-4)-isopropyl-amino)-1,3,5-triazin, Fp. 219 - 220° (Stabilisator 21),
2,4-Bis(diallylamino)-6-(1,2,2,6,6-pentamethylpiperidyl-4-amino)-1,3,5-triazin, $Kp_{0,06}$ 230 - 235° (Stabilisator Nr. 22)

**Beispiel 4:**

A) 700,8 g (3,3 Mol) 4-n-Butylamino-2,2,6,6-tetramethylpiperidin und 1500 ml Wasser werden im Reaktionskolben vorgelegt. In diese auf ca. 2° gekühlte Suspension werden unter Rühren (Ankerrührer) innerhalb ca. 30 Min. bei 0 - 5° (Aussenkühlung) 184,2 g (1,0 Mol) Cyanurchlorid eingetragen. Nach weiteren 30 Min. Rühren bei 0 - 5° wird innert 15 Min. die Lösung von 40 g (1,0 Mol) Natriumhydroxid in 50 ml Wasser

zugetropft und weitere 2 Std. bei 0 - 5° gerührt. Nun wird das Reaktionsgemisch ca. 30 Min. bei 40° gehalten, nach dieser Zeit wiederum die Lösung von 40 g (1,0 Mol) Natriumhydroxid in 50 ml Wasser zugefügt und weitere 2 Stunden bei 40° gehalten. Anschliessend wird 30 Min. auf Rückflusstemperatur erhitzt, nochmals die Lösung von 40 g (1,0 Mol) Natriumhydroxid in 50 ml Wasser zugefügt und während weiteren 12 Std. bei Rückflusstemperatur die Reaktion zu Ende geführt. Zur Isolierung der Triazin-Verbindung werden dem Reaktionsgemisch 800 ml Toluol zugefügt, nach 30 Min. Rühren die Toluolphase abgetrennt. Die Toluollösung wird zweimal mit Wasser gewaschen, über Natriumsulfat getrocknet und das Lösungsmittel im Vakuum abdestilliert. Den Rückstand kristallisiert man in Acetonitril um, wodurch das 2,4,6-Tris-N-(2,2,6,6-tetramethyl-piperidyl-4)-butylamino-1,3,5-triazin vom Fp. 166 - 167° erhalten wird.

Analyse:

| | | | | |
|---|---|---|---|---|
| $C_{42}H_{81}N_9$ | Ber.: | C 70,84 | H 11,47 | N 11,70 % |
| | Gef.: | C 70,8 | H 11,5 | N 11,9 % |

B) Das Reaktionsgemisch aus 42,7 g (0,06 Mol) 2,4,6-Tris-N-(2,2,6,6-tetramethyl-piperidyl-4)-butylamino-1,3,5-triazin, 43,6 g (0,36 Mol) Allylbromid, 27,7 g (0,2 Mol) Kaliumcarbonat, 2 g feinfulverigem Kaliumjodid und 150 ml Ethylmethylketon werden 32 Std. in einer $N_2$-Atmosphäre bei Rückflusstemperatur gerührt (Ankerrührer). Zur Aufarbeitung wird das Reaktionsgemisch warm filtriert, der Filterrückstand gut mit Dichlormethan nachgewaschen und aus den vereinigten Filtraten die Lösungsmittel im Vakuum vollständig abdestilliert. Den Rückstand kristallisiert man in Acetonitril/Ethylmethylketon (ca. 1 : 1) und anschliessend in reinem Acetonitril um, wodurch reines 2,4,6-Tris-[N-(1-allyl-2,2,6,6-tetramethyl-piperidyl-4)-butylamino]-1,3,5-triazin vom Fp. 161 - 163° erhalten wird (Stabilisator Nr. 23)

Analyse:

| | | | | |
|---|---|---|---|---|
| $C_{51}H_{93}N_9$ | Ber.: | C 73,59 | H 11,26 | N 15,15 % |
| (832,3) | Gef.: | C 73,4 | H 11,5 | N 15,2 % |

Das $^1H$-NMR-Spektrum steht mit der Struktur in Einklang.

In analoger Weise wird aus dem Stabilisator Nr. 17 durch Umsetzung mit überschüssigem Allylbromid das 2-Diallylamino-4,6-bis[N-(1-allyl-2,2,6,6-tetramethylpiperidyl-4)-butylamino]-1,3,5-triazin, Fp. 103 - 104°, hergestellt (Stabilisator Nr. 24).

Aus 2,4,6-Tris(2,2,6,6-tetramethylpiperidyl-4-oxy)-1,3,5-triazin wird in analoger Weise das 2,4,6-Tris(1-allyl-2,2,6,6-tetramethylpiperidyl-4-oxy)-1,3,5-triazin, Fp. 218 - 219°, hergestellt (Stabilisator Nr.25).

Aus 2,4,6-Tris[N-(2,2,6,6-tetramethylpiperidyl-4)-allyloxycarbonylmethylamino]-1,3,5-triazin wird in analoger Weise das 2,4,6-Tris-[N-(1-allyl-2,2,6,6-tetramethylpiperidyl-4)-allyloxycarbonylmethylamino]-1,3,5-triazin hergestellt, das bei etwa 55° erweicht (Stabilisator Nr. 26).

**Beispiel 5:**

Eine Mischung aus 12,1 g (0,035 Mol) 2,4-Bis-allylamino-6-(2,2,6,6-tetramethylpiperidyl-4-amino)-1,3,5-triazin (Smp 87 - 89°) und 6,07 g (0,0175 Mol) reinem Bisphenol-A-4,4'-diglycidylether wird unter Stickstoff und unter Rühren 31 Std. auf 110 - 115° erwärmt.

Anschliessend wird das Reaktionsgemisch auf Raumtemperatur gekühlt, in Dichlormethan gelöst, die Lösung dreimal mit 20 ml Wasser gewaschen, mit Aktivkohle behandelt und das Lösungsmittel abdestilliert. Die rohe Verbindung wird durch Chromatographie an Kieselgel 60 (Merck, Korngrösse 0,04 -0,063 mm) weiter gereinigt (Eluierungsmittel : Ether-Methanol 9 : 1), wodurch die Verbindung der Struktur

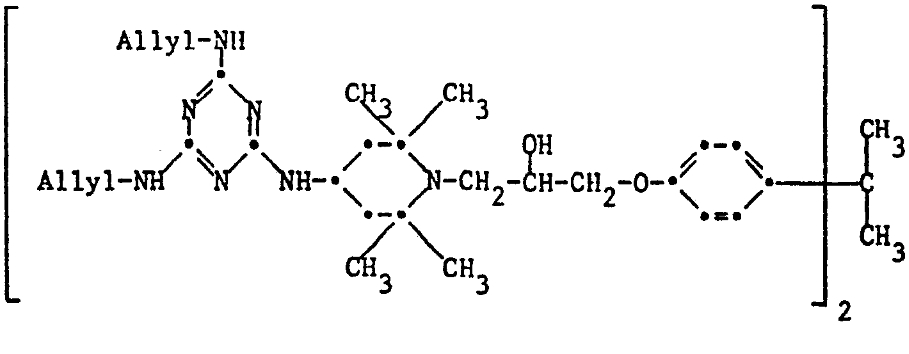

als Diastereoisomerengemisch erhalten wird, das bei etwa 120° erweicht (Stabilisator Nr. 27).

Analyse:

| | | | | |
|---|---|---|---|---|
| $C_{57}H_{86}N_{14}O_4$ | Ber.: | C 66,38 | H 8,42 | N 19,00 % |
| (1031,35) | Gef.: | C 66,5 | H 8,6 | N 18,7 % |

In analoger Weise wird 0,1 Mol Triglycidyl-isocyanurat mit 0,15 Mol Diallylamin und 0,15 Mol 2,2,6,6-Tetramethylpiperidin umgesetzt. Man erhält ein Produktegemisch, das bei 40° erweicht (Stabilisator Nr. 28).

**Beispiel 6:**

A) Zu einer Lösung von 103,6 g (0,15 Mol) N,N'-Bis(2,4-dichlor-1,3,5-triazinyl-6)-N,N'-bis(2,2,6,6-tetramethylpiperidyl-4)-hexamethylendiamin in 500 ml Toluol tropft man unter Rühren bei 30 - 40° innert einer Stunde 17,2 g (0,3 Mol) wasserfreies Allylamin. Anschliessend fügt man bei ca. 30° die Lösung von 12,0 g (0,3 Mol) Natriumhydroxid in 100 ml Wasser zu und rührt weitere 19 Std. bei 50°. Zur Aufarbeitung wird die wässrige Phase im Scheidetrichter abgetrennt, die organische Phase dreimal mit 200 ml Wasser gewaschen, über Natriumsulfat getrocknet und das Lösungsmittel im Vakuum abdestilliert. Der feste Rückstand wird in Ethylmethylketon umkristallisiert, wudurch reines N,N'-Bis(2-chlor-4-allylamino-1,3,5-triazinyl-6)-N,N'-bis(2,2,-6,6-tetramethylpiperidyl-4)-hexamethylendiamin vom Fp.210 - 211° erhalten wird.

Analyse:

| | | | | | |
|---|---|---|---|---|---|
| $C_{36}H_{60}N_{12}Cl_2$ | Ber.: | C 59,08 | H 8,26 | N 22,97 | Cl 9,69 % |
| (731,87) | Gef.: | C 59,2 | H 8,3 | N 22,9 | Cl 9,8 % |

B) 21,95 g (0,03 Mol) des obigen Dichlorides und 11,84 g (0,03 Mol) N,N'-Bis-(2,2,6,6-tetramethylpiperidyl-4)-hexamethylendiamin werden in 150 ml Xylol 2,5 Std. auf 130 - 135° erhitzt. Anschliessend fügt man bei dieser Temperatur in 4 Portionen in Zeitabständen von je 1 Std. insgesamt 2,8 g (0,07 Mol) fein pulverisiertes Natriumhydroxid zu und rührt weitere 16 Std. bei Rückflusstemperatur. Das Reaktionsgemisch - eine weisse Suspension - wird nun warm filtriert und der Filterrückstand wie unter C) angegeben weiter behandelt.

Aus dem klaren Filtrat wird im Vakuum das Xylol abdestilliert, der Rückstand mit 10 ml Diethylether verdünnt und diese Lösung unter kräftigem Turbinieren bei Raumtemperatur langsam in 300 ml Acetonitril eingegossen. Der entstandene Niederschlag wird abfiltriert und im Vakuum getrocknet.

Man erhält so das oligoaminotriazin der Formel

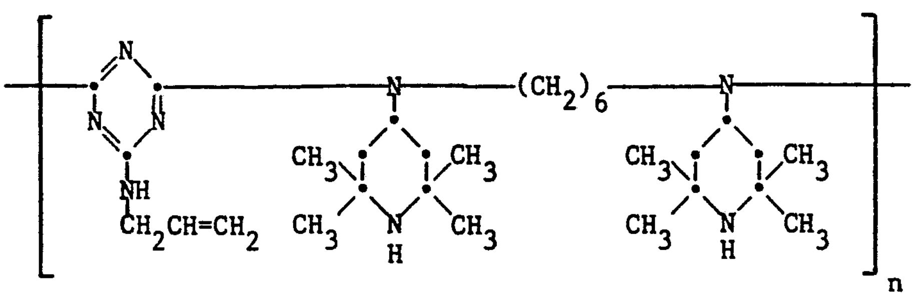

das bei ca. 140° erweicht und ein mittleres Molekulargewicht $\bar{M}_n$ von 2800 hat (Stabilisator Nr. 29).

Analyse:

| | | |
|---|---|---|
| $(C_{30}H_{54}N_8)_n$ | Ber.: | N 21,27 % |
| $(526,8)_n$ | Gef.: | N 21,0 % |

C) Der ohen erwähnte weisse Filterrückstand wird erst mit kaltem Dichlormethan und nach dem Trocknen mit Wasser gut ausgewaschen. Anschliessend wird der Rückstand in Dimethylacetamid heiss gelöst, die Lösung filtriert und zur Kristallisation gebracht. Das so erhaltene Kristallisat schmilzt nicht bis 350° und besitzt die folgende macrocyclische Struktur (Stabilisator Nr. 30).

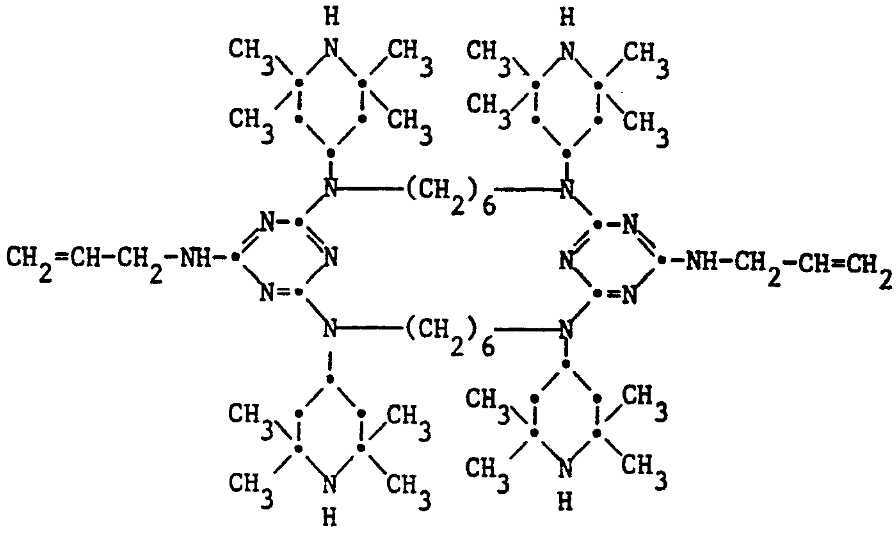

Analyse:

| | | | | |
|---|---|---|---|---|
| $C_{60}H_{108}N_6$ | Ber.: | C 68,40 | H 10,33 | N 21,27 % |
| (1053,64) | Gef.: | C 68,1 | H 10,5 | N 21,2 % |

In analoger Weise erhält man aus dem unter A) beschriebenen Dichlorid und N,N'-Bis(2,2,6,6-tetramethylpiperidyl-4)-ethylendiamin das Oligomer der Formel

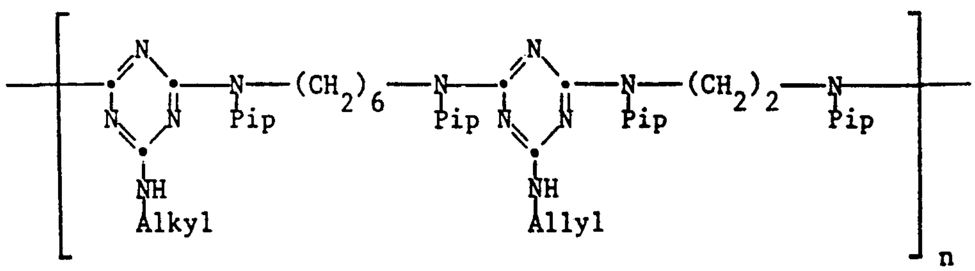

das bei 210° erweicht und ein $\bar{M}_n$ von 5200 besitzt (Stabilisator Nr. 31) sowie das entsprechende cyclische Dimere

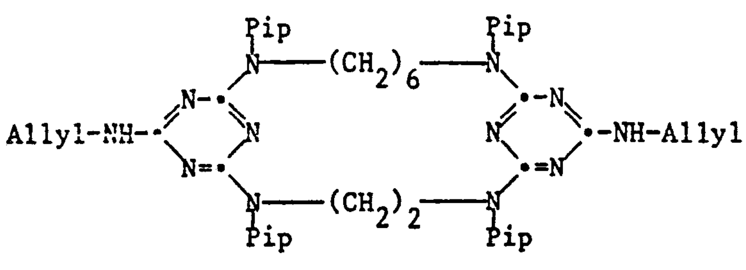

das bis 340° nicht schmilzt (Stabilisator Nr. 32).

In diesen Formeln bedeutet Pip einen 2,2,6,6-Tetramethylpiperidyl-4-Rest.

**Beispiel 7:**

Eine Lösung von 23,2 g (0,03 Mol) des Stabilisators Nr. 1 in 150 ml Essigsäureanhydrid wird unter Rühren in einer Stickstoffatmosphäre 24 Std. auf 90° erwärmt. Anschliessend wird das überschüssige Essigsäureanhydrid im Vakuum vollständig abdestilliert und das Rohprodukt an Kieselgel 60 (Merck/ 0,04-0,063 mm) durch Säulenchromatographie weiter gereinigt (Eluierungsmittel : Diethylether-Methanol 96 : 4) und in Ligroin/Toluol (9 : 1) umkristallisiert, wodurch man reines N,N'-Bis(2,4-bis(N-acetyl-allylamino)-1,3,5-triazinyl-6]-N,N'-bis-(1-acetyl-2,2,6,6-tetramethylpiperidyl-4)-hexamethylendiamin vom Fp. 139 - 140° erhält (Stabilisator Nr. 33).

Analyse:

| | | | | |
|---|---|---|---|---|
| $C_{54}H_{84}N_{14}O_6$ | Ber.: | C 63,25 | H 8,25 | N 19,13 % |
| (1025,3) | Gef.: | C 63,2 | H 8,3 | N 19,2 % |

Das $^1$H-NMR-Spektrum steht mit der angegebenen Struktur in Einklang.

Bei analoger Behandlung des Stabilisators Nr. 28 mit überschüssigem Essigsäureanhydrid erhält man das entsprechende O-Acetylderivat als weiches Harz (Stabilisator Nr. 34).

**Beispiel 8:**

Zu einer Lösung von 23,2 g (0,03 Mol) des Stabilisators Nr. 1, 33,5 ml (0,24 Mol) Triethylamin, 0,1 g 2,6-Di-tert.butyl-p-cresol und 160 ml Dichlormethan wird bei -10° bis -5° unter Rühren ($N_2$-Atmosphäre) innerhalb von ca. 5 Std. die Lösung von 18,9 g (0,21 Mol) frisch destilliertem Acrylsäurechlorid in 20 ml Dichlormethan getropft und ca. 24 Std. bei -5° weiter gerührt. Anschliessend wird auf Raumtemperatur erwärmt, das Reaktionsgemisch mit 150 ml Hexan versetzt und das ausgefallene Triethylaminhydrochlorid abfiltriert. Das Filtrat wäscht man nacheinander mit Wasser, 20 %-tiger Kaliumcarbonat-Lösung und wieder mit Wasser, trocknet die organische Phase über Natriumsulfat und destilliert die Lösungsmittel im Vakuum ab. Das Rohprodukt wird durch Chromatographie an Kieselgel 60 (Merck/0,04-0,63 mm) weiter gereinigt (Eluierungsmittel : Diethylether-Hexan 9 : 1) und anschliessend in Diisopropylether umkristallisiert, wodurch das N,N'-Bis[2,4-bis(N-acryloylallylamino)-1,3,5-triazinyl-6)-N,N'-bis-(1-acryloyl-2,2,6,6-tetramethylpiperidyl-4)-hexamethylendiamin vom Fp. 78 - 80° erhalten wird (Stabilisator Nr. 35).

Das $^1$H-NR-Spektrum (220 Mhz steht mit der angegebenen Struktur in Einklang.

**Verwendung der Stabilisatoren**

**Beispiel A**

Vernetzung von Polyethylen niedriger Dichte

26 g Polyethylen mit einer Dichte von 0,926 - 0,929 und einem Schmelzindex von 0,15 - 0,30 bei 190° und 2,16 kg werden mit 0,4 Gew.-% des im Beispiel 1 beschriebenen Stabilisators Nr. 1 gemischt und in einem Brabender-Plastographen 5 Min. bei 125°C plastifiziert. Als Vergleich werden entsprechende Proben ohne Stabilisatorzusatz bereitet. Nach erfolgter Plastifizierung werden weitere 12 g Polyethylen zusammen mit Dicumylperoxid als Radikalbildner zugesetzt und weitere 5 Minuten bei 125°C geknetet. Die Menge des Peroxids ist in Tabelle 1 angegeben. Anschliessend wird das Polymere aus der Mischkammer des Plastographen genommen und in einer Heizpresse bei 125° zu einer 1 mm dicken Platte gepresst. Diese wird anschliessend in einer zweiten Presse bei höherer Temperatur vernetzt. Nach einer bestimmten Zeit wird die Platte in einer dritten Presse gekühlt.

Aus dieser Platte werden Prüfkörper in Hantelform gemäss DIN 52 504 ausgestanzt. Zur Bestimmung des Vernetzungsgrades werden von jeder Probe 3 Prüfkörper in einem Ofen 15 Minuten bei 200° einer Zugkraft von 0,8 N (=20 N/cm$^2$) ausgesetzt und die resultierende Dehnung gemessen. Anschliessend werden die Prüfkörper ohne Belastung 5 Minuten auf 200° erwärmt. Die danach verbleibende Dehnung wird ebenfalls gemessen. Sofern unter diesen Bedingungen die Dehnung unter Zugkraft kleiner als 175 % und nach Entlastung kleiner als 5 % beträgt, ist die Vernetzung zufriedenstellend. Diese Prüfung wird "hot set" genannt.

Zur Bestimmung der Alterungsbeständigkeit werden die Prüfkörper in einen auf 150° geheizten Ofen mit zirkulierender Luft gehängt und in regelmässigen Abständen einer Kraft-Dehnungs-Prüfung unterworfen. In Tabelle 1 wird angegeben, nach wieviel Tagen die Reissdehnung auf die Hälfte des anfänglichen Wertes gesunken ist.

Dieselbe Prüfung auf Alterungsbeständigkeit wird ausserdem mit Prüfkörpern durchgeführt, die 5 Tage lang mit siedendem Chloroform extrahiert wurden.

Tabelle 1 Vernetzung von Polyethylen niederer Dichte mit Dicumulperoxid

| | | | | | |
|---|---|---|---|---|---|
| 1. Zusätze | | | | | |
| Stabilisator Nr. 1 | - | - | 0,4 % | - | 0,4 % |
| Dicumylperoxid | 2 % | 1,4 % | 1,4 % | 2 % | 1,4 % |
| 2. Vernetzung | | | | | |
| Zeit in Min | 15 | 15 | 15 | 2 | 2 |
| Temperatur | 180° | 180° | 180° | 210° C | 210° C |
| 3. Resultate | | | | | |
| 3.1. hot set | | | | | |
| Dehnung unter Belastung | 120 % | ∞ | 55 % | 101 % | 110% |
| Restdehnung nach Entlastung | 5 % | - | 0 % | 2 % | 0 % |
| 3.2. Alterungsprüfung bei 150° C Zeit bis Reissdehnung auf 50 % des anfänglichen Wertes sinkt (Tage) | < 1 | < 1 | 42 | < 1 | 42 |
| Dasselbe nach 5 Tagen Extraktion mit Chloroform | < 1 | < 1 | 14 | < 1 | 14 |
| 3.3. Aussehen | gut | gut | gut | kleine Blasen | gut |

Proben der mit Stabilisator 1 vernetzten Proben wurden vor und nach der Extraktion mit $CHCl_3$ auf ihren Stickstoff-Gehalt analysiert. Dabei zeigte sich, dass der Stickstoff-Gehalt vor und nach der Extraktion praktisch gleich ist, was ein Beweis für den chemischen Einbau des Stabilisators ist.

Verwendet man hingegen anstelle von Stabilisator Nr. 1 die entsprechende gesättigte Piperidin-Triazin-Verbindung der Formel

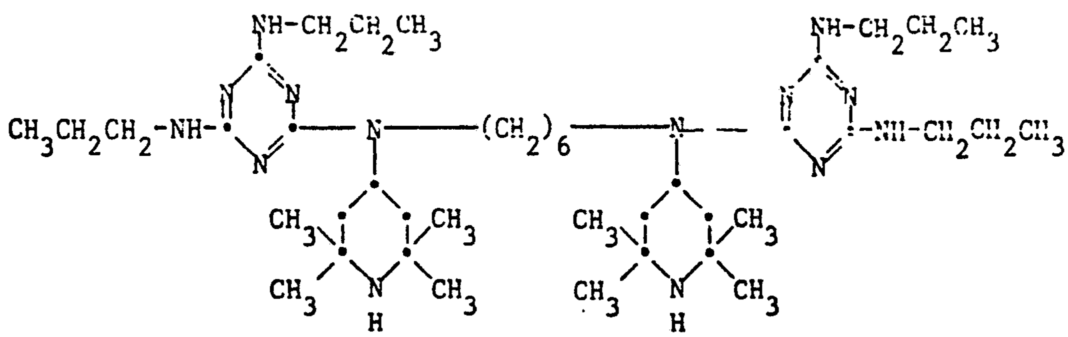

so geht die Alterungsstabilität nach der Extraktion weitgehend verloren und der Stickstoffgehalt geht durch die Extraktion auf 20 - 30 % des Anfangswertes zurück.

**Beispiel B**

Propfung einer Monoallylverbindung

Analog Beispiel A wird Polyethylen niedriger Dichte mit 2 % Dicumylperoxid und 0,4 % des Stabilisators Nr. 2

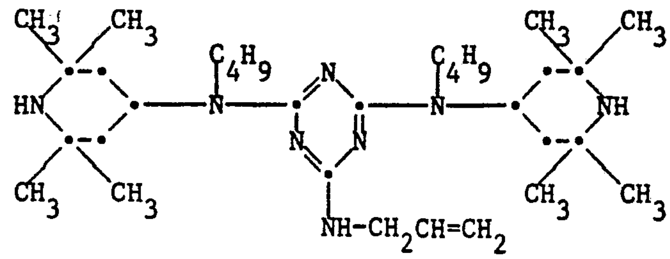

10 Minuten bei 125° verpresst und 15 Minuten bei 180° vernetzt. Die so erhaltenen Platten haben einen Gehalt von 780 ppm Stickstoff. Nach 7 Tagen Extraktion mit siedendem Chloroform beträgt der Stickstoffgehalt 630 ppm, entsprechend 80 % des Anfangswertes.

**Beispiel C**

Vernetzung von Polyethylen niedriger Dichte

Es wird wie in Beispiel A verfahren, jedoch als Radikalbildner Ethyl-O-benzoyl-dodecanhydroximat, eine Verbindung der Formel

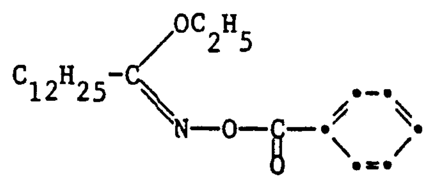

verwendet und als zusätzliches Vernetzungshilfsmittel Triallylcyanurat zugesetzt. Die Platten werden bei 125° gepresst und zur Vernetzung anschliessend 10 Minuten auf 240° erhitzt.

Zugesetzt werden

0,4 % Stabilisator Nr. 1

1 % Triallylcyanurat

2 % Ethyl-O-benzoyl-dodecanhydroximat

Zur Prüfung der Alterungsbeständigkeit wird die Reissdehnung nach 14 und 28 Tagen Alterung bei 150° im Umluftofen bestimmt. Sie beträgt

| | | |
|---|---|---|
| vor der Alterung | 214 | mm auf 45 mm Einspannungslänge |
| nach 14 Tagen Alterung | 201 | -"- |
| nach 28 Tagen Alterung | 225 | -"- |

Eine Vergleichsprobe ohne den Stabilisator Nr. 1 wurde in derselben Weise behandelt und zeigte eine Reissdehnung

| | | |
|---|---|---|
| vor der Alterung | 145 | mm auf 45 mm Einspannungslänge |
| nach 14 Tagen Alterung | 19 | -"- |
| nach 28 Tagen Alterung | 13 | -"- |

**Beispiel D**

Vernetzung von Polyethylen hoher Dichte.

26 g Polyethylen mit einer Dichte von 0,949 - 0,953 und einem Schmelzindex von 1,0 - 2,3 bei 190° und 21,9 kg werden mit den in Tabelle 2 genannten Stabilisatoren gemischt und 5 Minuten bei 200°C im Brabender-Plastographen plastifiziert. Zur plastifizierten Mischung werden weitere 12 g Polyethylen zusammen mit den in Tabelle 2 bezeichneten Mengen an 2,2-Azobis-(2-acetoxypropan) als Radikalbildner zugesetzt und weitere 5 Minuten bei 200°C geknetet. Das plastifizierte Polymere wird in einer Heizpresse bei 200° zu einer 1 mm dicken Platte gepresst, die anschliessend in einer zweiten Presse bei höherer Temperatur vernetzt wird. Zeit und

Temperatur der Vernetzung sind in Tabelle 2 angegegeben. In einer dritten Presse wird die Platte anschliessend gekühlt.

Von dieser Platte werden mit einem Mikrotom 0,05 mm dicke und 1 mm breite Späne abgehoben und 0,5 g davon in einem Körbchen aus rostfreiem Stahldrahtnetz eingewogen. Das Körbchen wird verschlossen und 24 h in siedendem Toluol extrahiert, das mit 1 % Bis-(2-hydroxy-3-tert.butyl-5-methylphenyl)-methan stabilisiert ist. Das Körbchen wird zum Abtropfen des Toluols erst bei 100°, dann bei Raumtemperatur aufgehängt, im Vakuum getrocknet und gewogen. Der ungelöste Polymer-Rückstand entspricht dem vernetzten Anteil. Er ist in Tabelle 2 in Prozent der eingesetzten Menge Polyethylen-Späne angegeben.

Zur Bestimmung der Alterungsbeständigkeit wird wie in Beispiel A verfahren.

Tabelle 2 Vernetzung von Polyethylen hoher Dichte mit 2,2-Azobis-(2-acetoxypropan)

| | | | | | | | |
|---|---|---|---|---|---|---|---|
| 1. Zusätze | | | | | | | |
| Stabilisator Nr. 1 | - | - | - | 0,4 | 0,4 | 0,4 | 0,4 |
| 2,2-Azobis-(2-acetoxypropan) | 1,5 | 1,0 | 0,8 | 0,8 | 0,5 | 0,8 | 0,5 |
| Irganox ® 1010[1]) | - | - | - | - | - | 0,1 | 0,1 |
| Irganox ® 1076 [2]) | 0,25 | 0,25 | 0,25 | 0,25 | 0,25 | - | - |
| Irgafos ® 168 | 0,2 | 0,2 | 0,2 | 0,2 | 0,2 | 0,2 | 0,2 |
| 2. Vernetzung | | | | | | | |
| Zeit in Min | 6 | 6 | 6 | 6 | 6 | 6 | 6 |
| Temperatur °C | 260 | 260 | 260 | 260 | 260 | 260 | 260 |
| 3. Resultate | | | | | | | |
| 3.1 Vernetzungsgrad (Rückstand nach Toluolextraktion) | 71,8 % | 55,9 % | 0 % | 71 % | 61,7 % | 71,9 % | 67,4 % |
| 3.2. Alterungsprüfung bei 150° C Zeit bis Reissdehnung auf 50 % des anfänglichen Wertes fällt (Tage) | < 7 | < 7 | < 7 | 49 | 49 | 35 | 49 |

1) Pentaerythrit-tetrakis-(β-(4-hydroxy-3,5-di-tert.butylphenyl)-propionat]
2) Octadecyl-β-(4-hydroxy-3,5-di-tert.butylphenyl)-propionat
3) Tris(2,4-di-tert.butyl-phenyl)-phosphit

**Beispiel E**

Vernetzung von Polyethylen niedriger Dichte

Polyethylen der Dichte 0,926 - 0,929 wird mit 0,4 % der in Tabelle 3 aufgeführten Piperidin-Triazin-Stabilisatoren und 1,6 % Dicumylperoxid vermischt und wie in Beispiel A beschrieben bei 125° zu Platten verpresst, die zur Vernetzung 15 Minuten auf 180° erhitzt werden.

Wie in Beispiel A beschrieben wird von den Platten der "hot set" als Mass der Vernetzung gemessen sowie die Reissdehnung nach Ofenalterung. Die Ergebnisse sind in Tabelle 3 zusammengestellt.

Tabelle 3 - Vernetzung von Polyethylen unter Einbau verschiedener Stabilisatoren

| Stabilisator | Hot-Set-Dehnung (%) unter Belastung | nach Entlastung | Ofenalterung bei 150° Zeit bis 50 % Reissdehnung (Tage) |
|---|---|---|---|
| No. 1 | 110 | 0 | 28 |
| Nr. 6 | 116 | 0 | > 28 |
| Nr. 7 | 103 | 0 | > 28 |
| Nr. 8 | 108 | 1 | 28 |
| Nr. 9 | 158 | 5 | 14 |
| Nr. 11 | 95 | 0 | 21 |
| Nr. 12 | 60 | 0 | 7 |
| Nr. 14 | 83 | 0 | 21 |
| Nr. 15 | 100 | 0 | 28 |
| Nr. 16 | 85 | 0 | 28 |
| Nr. 22 | 80 | 0 | 7 |
| Nr. 27 | 130 | 0 | > 28 |
| Nr. 33 | 149 | 8 | 28 |

**Beispiel F**

Kombination mit Antioxydantien

Polyethylen niedriger Dichte wird wie in Beispiel A beschrieben mit 1,7 % Dicumylperoxid und 0,6 % Stabilisator gemischt und bei 125 ° zu Platten verpresst, die 10 Minuten bei 240° vernetzt werden. Als Stabilisator wird einmal ein handelsübliches Antioxydans und das anderemal ein erfindungsgemässer Stabilisator sowie ein Gemisch der beiden Stabilisatoren verwendet.

Die Proben werden auf ihren Vernetzungsgrad durch Bestimmung des Hot Set geprüft und auf ihre Alterungsbeständigkeit durch Messung der Reisskraft nach Ofenalterung bei 150°. Die Ergebnisse sind in Tabelle 4 aufgeführt.

Tabelle 4 - Vernetzung von Polyethylen niedriger Dichte

| Stabilisator | Hot-Set-Dehnung (%) unter Belastung | nach Entlastung | Reisskraft in kg nach Ofenalterung (Tage) 0 | 7 Tage | 22 Tage |
|---|---|---|---|---|---|
| 0,6 % Stabilisator Nr. 1 | 65 | 0 | 10,2 | 6,9 | 5,2 |
| 0,6 % Irganox ® 1076 * | 178 | 3 | 9,2 | 0 | 0 |
| 0,3 % Stabilisator Nr. 1 + 0,3 % Irganox ® 1076 | 71 | 0 | 9,7 | 7,4 | 6,6 |

Man ersieht daraus, dass das Gemisch des Stabilisators Nr. 1 mit Irganox ® 1076 etwa dieselbe Wirkung hat wie der Stabilisator Nr. 1 allein, während Irganox ® 1076 allein völlig ungeeignet ist.

*) Octadecyl-β-(4-hydroxy-3,5-di-t-butylphenyl)-propionat

**Patentansprüche**

1. Verfahren zur chemischen Bindung von Polyalkylpiperidin-Stabilisatoren an Polymere durch Pfropfung von ethylenisch ungesättigten Polyalkylpiperidinderivaten unter Einwirkung von chemisch oder physikalisch erzeugten freien Radikalen auf das zu stabilisierende Polymere, dadurch gekennzeichnet, dass man als Stabilisator eine s-Triazinverbindung verwendet, die in ihren Molekül mindestens eine ethylenisch ungesättigte Gruppe und mindestens eine 2,2,6,6-Tetramethylpiperidingruppe enthält.

2. Verfahren gemäss Anspruch 1, dadurch gekennzeichnet, dass man als Stabilisator eine s-Triazinverbindung verwendet, die neben mindestens einer 2,2,6,6-Tetramethylpiperidingruppe noch mindestens zwei ethylenisch ungesättigte Gruppen besitzt, wodurch eine Vernetzung des Polymeren erzielt werden kann.

3. Verfahren gemäss Anspruch 1, dadurch gekennzeichnet, dass das zu stabilisierende Polymere ein

Polyolefin oder Olefin-Copolymerisat ist.

4. Verfahren gemäss Anspruch 3, dadurch gekennzeichnet, dass das Polymere Polypropylen ist.

5. Verfahren gemäss Anspruch 3, dadurch gekennzeichnet, dass das Polymere Polyethylen oder chloriertes Polyethylen ist.

6. Verfahren gemäss Anspruch 1, dadurch gekennzeichnet, dass die Radikale durch Zusatz eines Radikalbildners zum Polymeren und Erhitzen des Polymeren über die Zersetzungstemperatur des Radikalbildners erzeugt werden.

7. Verfahren gemäss Anspruch 6, dadurch gekennzeichnet, dass man als Radikalbildner eine organische Peroxyverbindung verwendet.

8. Verfahren gemäss Anspruch 6, dadurch gekennzeichnet, dass man als Radikalbildner eine aliphatische Azoverbindung verwendet.

9. Verfahren gemäss Anspruch 1, dadurch gekennzeichnet, dass man die Radikale durch Bestrahlung des Polymeren mit energiereicher Strahlung, insbesondere durch Elektronenstrahlen oder γ-Strahlen, erzeugt.

10. Verfahren gemäss Anspruch 1, dadurch gekennzeichnet, dass man dem Polymeren zusätzlich zum Piperidin-Triazin-Stabilisator ein phenolisches Antioxydans zusetzt.

11. Verfahren gemäss Anspruch 10, dadurch gekennzeichnet, dass man als Antioxydant ein Derivat der β-(3,5-Di-t-butyl-4-hydroxyphenyl)-propionsäure, insbesondere deren Octadecylester zusetzt.

12. Verfahren gemäss Anspruch 1, dadurch gekennzeichnet, dass man als Stabilisator eine Verbindung der allgemeinen Formel I verwendet,

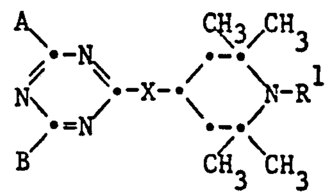

I

worin $R^1$ Wasserstoff, Oxyl-Sauerstoff, $C_1$-$C_{12}$-Alkyl, $C_3$-$C_7$-Alkenyl, $C_7$-$C_{11}$-Phenylalkyl, Cyanomethyl, $C_2$-$C_{18}$-Alkanoyl oder $C_3$-$C_{18}$-Alkenoyl, eine Gruppe -CON($R^2$)($R^3$) oder eine Gruppe -$CH_2$-CH($R^4$)-OH bedeutet, worin $R^2$ $C_1$-$C_{12}$-Alkyl, Allyl, Cyclohexyl, Benzyl, Phenyl oder $C_7$-$C_{12}$-Alkylphenyl und

$R^3$ Wasserstoff, $C_1$-$C_{12}$-Alkyl, Allyl oder Benzyl bedeuten oder

$R^2$ und $R^3$ zusammen mit dem N-Atom, an das sie gebunden sind, einen 5- oder 6-gliedrigen heterocyclischen Ring bilden, und

$R^4$ Wasserstoff, $C_1$-$C_{12}$-Alkyl, Phenyl, $C_2$-$C_{13}$-Alkoxymethyl oder Phenoxymethyl bedeutet,

X eine zweiwertige Gruppe der Formel -O-, -N($R^5$)-, -NH-$CH_2$-$CH_2$-, -NH-$(CH_2)_2$-O-, -NH-$(CH_2)_3$-O- oder -N($R^5$)-$R^7$-N($R^6$)- bedeutet, worin

$R^5$ Wasserstoff, $C_1$-$C_{12}$-Alkyl, $C_3$-$C_7$-Alkenyl, Cyclohexyl, $C_3$-$C_{12}$ -Alkoxyalkyl, $C_5$-$C_{12}$ -Alkenoxyalkyl, $C_4$-$C_{12}$-Dialkylaminoalkyl, eine Gruppe -$CH_2$-CH($R^4$)-OH, Benzyl, eine Gruppe der Formel

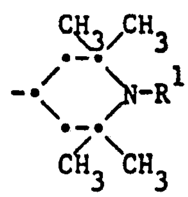

oder der Formel

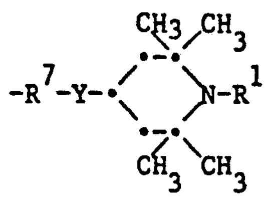

bedeutet,

$R^6$ Wasserstoff, $C_1$-$C_{12}$-Alkyl, $C_3$-$C_7$-Alkenyl, Cyclohexyl eine Gruppe -$CH_2$-CH($R^4$)-OH eine Gruppe der Formel

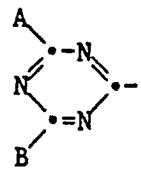

bedeutet,

$R^7$ $C_2$-$C_{12}$-Alkylen, das durch 1, 2 oder 3 der Gruppen -O- oder -N($R^6$)-unterbrochen sein kann, $C_6$-$C_{14}$-Cycloalkylen oder Cycloalkylendialkylen bedeutet,

Y eine zweiwertige Gruppe der Formel -O- oder N($R^6$)- bedeutet und A und B, unabhängig voneinander,

(a) eine Gruppe der Formel $R^8$O- oder R($^9$) ($R^{10}$) N- bedeuten, worin

$R^8$ $C_1$-$C_{12}$-Alkyl, $C_3$-$C_7$-Alkenyl, $C_3$-$C_{12}$-Alkoxyalkyl, $C_4$-$C_{12}$-Dialkylaminoalkyl, Cyclohexyl, Benzyl, Phenyl oder $C_7$-$C_{12}$-Alkylphenyl bedeutet,

$R^9$ $C_1$-$C_{12}$-Alkyl, $C_3$-$C_7$-Alkenyl, $C_5$-$C_8$-Cycloalkyl, $C_3$-$C_{12}$-Alkoxyalkyl, $C_5$-$C_{12}$-Alkenoxyalkyl, $C_4$-$C_{12}$-Dialkylaminoalkyl, eine Gruppe -$CH_2$-CH($R^4$)-OH, Phenyl, $C_7$-$C_{12}$-Alkylphenyl oder $C_7$-$C_{11}$-Phenylalkyl bedeutet und

$R^{10}$ Wasserstoff, $C_1$-$C_{12}$-Alkyl, $C_3$-$C_7$-Alkenyl, $C_5$-$C_8$-Cycloalkyl, $C_3$-$C_{12}$-Alkoxyalkyl, $C_5$-$C_{12}$-Alkenoxyalkyl, $C_4$-$C_{12}$-Dialkylaminoalkyl, $C_2$-$C_{12}$-Alkanoyl, $C_3$-$C_{12}$-Alkenoyl, eine Gruppe -$CH_2$CH($R^4$)-OH oder $C_7$-$C_{11}$-Phenylalkyl bedeutet, oder $R^9$ und $R^{10}$ zusammen mit dem N-Atom, an das sie gebunden sind einen 5- oder 6-gliedrigen heterocyclischen Ring bilden, oder

(b) eine Gruppe der Formel

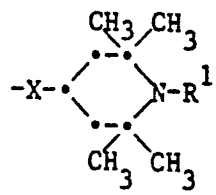

bedeuten,

wobei mindestens eine der Gruppen $R^1$, $R^2$, $R^3$, $R^5$, $R^6$, $R^8$, $R^9$ oder $R^{10}$ einen Alkenyl- oder Alkenoylrest darstellt.

13. Verfahren gemäss Anspruch 12, wobei in Formel I mindestens zwei der Gruppen $R^1$, $R^2$, $R^3$, $R^5$, $R^6$, $R^8$, $R^9$ oder $R^{10}$ einen Alkenyl- oder Alkenoylrest darstellen.

14. Verfahren gemäss Anspruch 12, wobei in Formel I der Substituent A oder die Substituenten A und B eine Gruppe der Formel $R^8$O- oder ($R^9$)($R^{10}$)N- bedeuten, worin $R^8$ und $R^9$ $C_3$-$C_7$-Alkenyl bedeuten.

15. Verfahren gemäss Anspruch 14, wobei A und B eine Gruppe der Formel $R^8$O- oder ($R^9$)($R^{10}$)N- bedeuten worin $R^8$ und $R^9$ Allyl sind.

16. Verfahren gemäss Anspruch 12, wobei in Formel I der Substituent A eine Gruppe ($R^{9'}$)($R^{10'}$)N- ist, worin $R^{9'}$ $C_3$-$C_7$-Alkenyl und $R^{10'}$ $C_1$-$C_{12}$-Alkyl, Cyclohexyl, Hydroxyethyl, Benzyl, $C_2$-$C_{12}$-Alkanoyl oder $C_3$-$C_5$-Alkenoyl bedeuten.

17. Verfahren gemäss Anspruch 15, wobei in Formel I die Substituenten A und B eine Gruppe $R^8$O- oder ($R^9$)($R^{10}$)N- bedeuten, worin $R^8$ und $R^9$ Allyl sind, und X eine Gruppe -N($R^5$)- ist, worin $R^5$ eine Gruppe der Formel

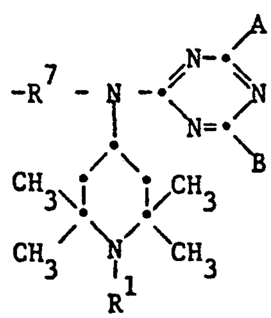

bedeutet und $R^1$, $R^7$ und $R^{10}$ die in Anspruch 12 gegebene Bedeutung haben.

18. Verfahren gemäss Anspruch 12, wobei in Formel I $R^1$ $C_3$-$C_7$-Alkenyl, $C_7$-$C_{11}$-Phenylalkyl, Cyanomethyl, $C_2$-$C_{18}$-Alkanoyl, $C_3$-$C_{18}$-Alkenoyl oder -CON($R^2$)($R^3$) bedeutet.

19. Verfahren gemäss Anspruch 1, dadurch gekennzeichnet, dass man als Stabilisator eine Verbindung der allgemeinen Formel II verwendet,

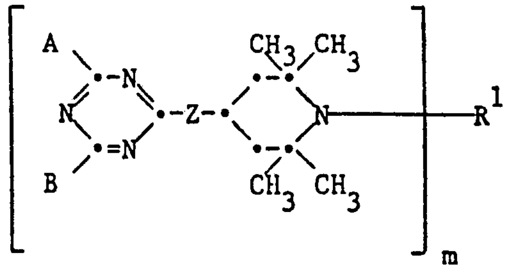

II

worin m 2, 3 oder 4 ist,

$R^{11}$ ein m-wertiger Rest ist und $C_2$-$C_{12}$-Alkylen, $C_4$-$C_8$-Alkenylen, Xylylen oder eine Gruppe $-CH_2-CH(OH)-CH_2-$, $-CH_2-CH(OH)-CH_2-D-CH_2-$, $-CH(OH)-CH_2-$, $-[-CH_2-CH(OH)-CH_2-]-_3$ T oder $-[-CH_2-CH(OH)-CH_2-]-+_4$Q ist, wobei D einen Rest $-O-R^{12}-O-$ oder $-OOC-R^{13}COO-$ bedeutet, worin $R^{12}$ und $R^{13}$ zweiwertige aliphatische, cycloaliphatische, aromatische oder araliphatische Reste bedeuten,

T eine dreiwertige aliphatische oder heterocyclische Gruppe bedeutet und Q eine vierwertige aliphatische Gruppe bedeutet,

Z eine zweiwertige Gruppe der Formel -O-, oder $-N(R^{14})-$ ist, worin $R^{14}$ Wasserstoff, $C_1$-$C_{12}$-Alkyl, $C_3$-$C_7$-Alkenyl, Cyclohexyl, $C_2$-$C_4$-Hydroxyalkyl, $C_3$-$C_{12}$-Alkoxyalkyl, $C_5$-$C_{12}$-Alkenoxyalkyl, $C_4$-$C_{12}$-Dialkylaminoalkyl, oder Benzyl ist,

und A und B die in Anspruch 12 gegebene Bedeutung haben, wobei das Molekül mindestens eine Alkenyl- oder Alkenoylgruppe enthält.

20. Verfahren gemäss Anspruch 19, wobei das Molekül mindestens zwei Alkenyl- oder Alkenoylgruppen enthält.

21. Verfahren gemäss Anspruch 19, wobei in Formel II der Substituent A eine Gruppe $R^8O$- oder $(R^9)$ $(R^{10})N$- bedeutet, worin $R^8$ und $R^9$ eine $C_3$-$C_7$-Alkenylgruppe sind und $R^{10}$ eine der in Anspruch 12 gegebenen Bedeutungen hat.

22. Verfahren gemäss Anspruch 21, wobei in Formel II A und B eine Gruppe der Formel $R^8O$- oder $(R^9)(R^{10})N$- bedeuten und $R^8$ und $R^9$ Allyl sind.

23. Verfahren gemäss Anspruch 1, dadurch gekennzeichnet, dass man als Stabilisator eine Verbindung der Formel III verwendet,

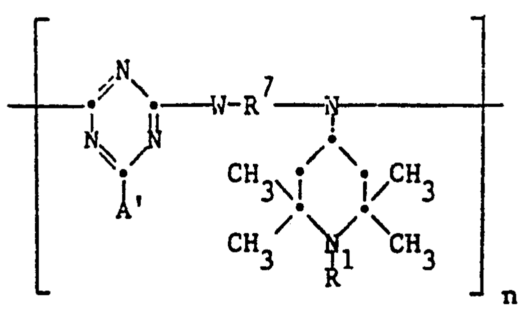

III

worin n ein Wert von 2 bis 20 ist,

A' eine Gruppe der Formel $R^8O$- oder $(R^9)(R^{10})N$- ist, worin $R^8$ und $R^9$ $C_3$-$C_7$-Alkenyl bedeuten,

W eine zweiwertige Gruppe der Formel -O- oder $-N(R^{16})$ - ist, worin

$R^{16}$ Wasserstoff, $C_1$-$C_{12}$-Alkyl, $C_3$-$C_7$-Alkenyl, Cyclohexyl, Benzyl oder eine Gruppe der Formel

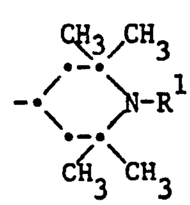

bedeutet,

und $R^1$, $R^7$ und $R^{10}$ die in Anspruch 12 gegebene Bedeutung haben.

24. Verfahren gemäss Anspruch 23, wobei in Formel III der Substituent A' eine Allylamino- oder Diallylaminogruppe ist.

25. Verfahren gemäss Anspruch 1, dadurch gekennzeichnet, dass man als Stabilisator eine Verbindung der Formel IV verwendet,

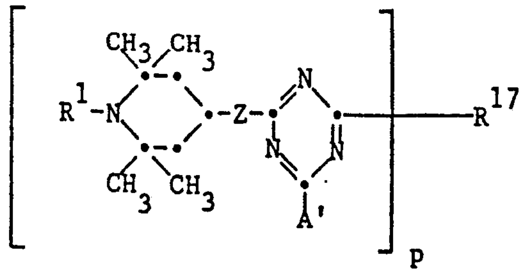

IV

worin $R^1$ die in Anspruch 12 gegebene Bedeutung hat, Z die in Anspruch 20 gegebene Bedeutung hat, A' die in Anspruch 24 gegebene Bedeutung hat, p 2, 3 oder 4 ist und $R^{17}$ der p-wertige Rest eines Polyols oder eines Polyamins ist.

26. Verfahren gemäss Anspruch 25, wobei in Formel IV der Substituent A' eine Allyloxy-, Allylamino- oder Diallylaminogruppe bedeutet.

27. Verfahren gemäss Anspruch 25, wobei in Formel IV der Substituent A' eine Gruppe $(R^9)(R^{10}N$- ist und $R^{10}$ $C_1$-$C_{12}$-Alkyl, Cyclohexyl, Hydroxyethyl, Benzyl, $C_2$-$C_{12}$-Alkanoyl oder $C_3$-$C_5$-Alkenoyl bedeutet.

28. Verfahren gemäss Anspruch 25, wobei in Formel IV $R^1$ $C_3$-$C_7$-Alkenyl, $C_7$-$C_{11}$-Phenylalkyl, Cyanomethyl, $C_2$-$C_{18}$-Alkanoyl, $C_3$-$C_{18}$-Alkenoyl oder $-CON(R^2)(R^3)$ bedeutet und $R^2$ und $R^3$ die in Anspruch 1 gegebene Bedeutung haben.

29. Eine Verbindung der allgemeinen Formel I,

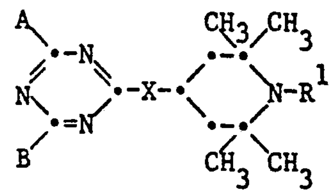

I

worin $R^1$ Wasserstoff, $C_1$-$C_{12}$-Alkyl, $C_3$-$C_7$-Alkenyl, $C_7$-$C_{11}$-Phenylalkyl, Cyanomethyl, $C_2$-$C_{18}$-Alkanoyl oder $C_3$-$C_{18}$-Alkenoyl, eine Gruppe $-CON(R^2)(R^3)$ oder eine Gruppe $-CH_2-CH(R^4)-OH$ bedeutet, worin

$R^2$ $C_1$-$C_{12}$-Alkyl, Allyl, Cyclohexyl, Benzyl, Phenyl oder $C_7$-$C_{12}$-Alkylphenyl und

$R^3$ Wasserstoff, $C_1$-$C_{12}$-Alkyl, Allyl oder Benzyl bedeuten oder

$R^2$ und $R^2$ zusammen mit dem N-Atom, an das sie gebunden sind, eine 5- oder 6-gliedrigen heterocyclischen Ring bilden, und

$R^4$ Wasserstoff, $C_1$-$C_{12}$-Alkyl, Phenyl, $C_2$-$C_{13}$-Alkoxymethyl oder Phenoxymethyl bedeutet,

X eine zweiwertige Gruppe der Formel -O-, $-N(R^5)-$, $-NH-CH_2-CH_2-$, $-NH-(CH_2)_2-O-$, $-NH-(CH_2)_3-O-$ oder $-N(R^5)-R^7-N(R^6)-$ bedeutet, worin

$R^5$ Wasserstoff, $C_1$-$C_{12}$-Alkyl, $C_3$-C -Alkenyl, Cyclohexyl, $C_3$-$C_{12}$-Alkoxyalkyl, $C_5$-$C_{12}$-Alkenoxyalkyl, $C_4$-$C_{12}$-Dialkylaminoalkyl, eine Gruppe $-CH_2-CH(R^4)-OH$, Benzyl, eine Gruppe der Formel

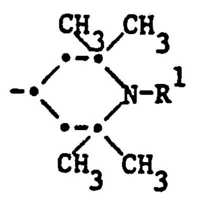

oder der Formel

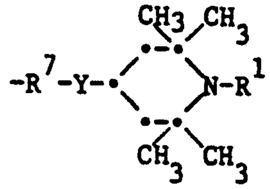

bedeutet,

$R^6$ Wasserstoff, $C_1$-$C_{12}$-Alkyl, $C_3$-$C_7$-Alkenyl, Cyclohexyl, eine Gruppe $-CH_2-CH(R^4)-OH$ oder eine Gruppe der Formel

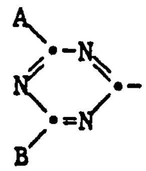

bedeutet,

$R^7$ $C_2$-$C_{12}$-Alkylen, das durch 1, 2 oder 3 der Gruppen -O- oder -N($R^6$)-unterbrochen sein kann, $C_6$-$C_{14}$-Cycloalkylen oder Cycloalkylendialkylen bedeutet,

Y eine zweiwertige Gruppe der Formel -O- oder -N($R^6$)- bedeutet,

A eine Gruppe der Formel ($R^{9'}$)($R^{10'}$)N- ist, worin $R^{9'}$ eine $C_3$-$C_7$-Alkenylgruppe bedeutet und $R^{10'}$ $C_1$-$C_{12}$-Alkyl, Hydroxyethyl, Cyclohexyl, Benzyl, $C_2$-$C_{12}$-Alkanoyl oder $C_3$-$C_5$-Alkenoyl bedeutet, und

B entweder

(a) eine Gruppe der Formel $R^8$O- oder ($R^9$) ($R^{10}$)N- bedeutet, worin

$R^8$ $C_1$-$C_{12}$-Alkyl, $C_3$-$C_7$-Alkenyl, $C_3$-$C_{12}$-Alkoxyalkyl, $C_4$-$C_{12}$-Dialkylaminoalkyl, Cyclohexyl, Benzyl, Phenyl oder $C_7$-$C_{12}$-Alkylphenyl bedeutet,

$R^9$ $C_1$-$C_{12}$-Alkyl, $C_3$-$C_7$-Alkenyl, $C_5$-$C_8$-Cycloalkyl, $C_3$-$C_{12}$-Alkoxyalkyl, $C_5$-$C_{12}$-Alkenoxyalkyl, $C_4$-$C_{12}$-Dialkylaminoalkyl, eine Gruppe - $CH_2$-$CH(R^4)$-OH, Phenyl, $C_7$-$C_{12}$-Alkylphenyl oder $C_7$-$C_{11}$-Phenylalkyl bedeutet und

$R^{10}$ Wasserstoff, $C_1$-$C_{12}$-Alkyl, $C_3$-$C_7$-Alkenyl, $C_5$-$C_8$-Cycloalkyl, $C_3$-$C_{12}$-Alkoxyalkyl, $C_5$-$C_{12}$-Alkenoxyalkyl, $C_4$-$C_{12}$-Dialkylaminoalkyl, $C_2$-$C_{12}$-Alkanoyl, $C_3$-$C_{12}$-Alkenoyl, eine Gruppe -$CH_2CH(R^4)$-OH oder $C_7$-$C_{11}$-Phenylalkyl bedeutet, oder $R^9$ und $R^{10}$ zusammen mit dem N-Atom, an das sie gebunden sind einen 5- oder 6-gliedrigen heterocyclischen Ring bilden, oder

(b) eine Gruppe der Formel

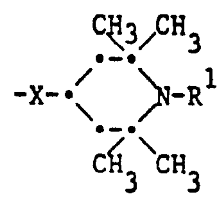

bedeutet.

30. Eine Verbindung der allgemeinen Formel I,

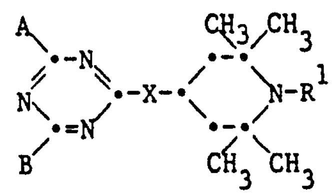

I

worin $R^1$ $C_3$-$C_7$-Alkenyl, $C_7$-$C_{11}$-Phenylalkyl, Cyanomethyl, $C_2$-$C_{18}$-Alkanoyl, $C_3$-$C_{18}$-Alkenoyl, oder eine Gruppe -CON($R^2$)($R^3$) bedeutet, worin $R^2$ $C_1$-$C_{12}$-Alkyl, Allyl, Cyclohexyl, Benzyl, Phenyl oder $C_7$-$C_{12}$-Alkylphenyl und

$R^3$ Wasserstoff, $C_1$-$C_{12}$-Alkyl, Allyl oder Benzyl bedeuten oder $R^2$ und $R^3$ zusammen mit dem N-Atom, an das sie gebunden sind, einen 5- oder 6-gliedrigen heterocyclischen Ring bilden,

X eine zweiwertige Gruppe der Formel -O-, -N($R^5$)-, -NH-$CH_2$-$CH_2$-, -NH-$(CH_2)_2$-O-, -NH-$(CH_2)_3$-O- oder -N($R^5$)-$R^7$-N($R^6$)- bedeutet, worin

$R^5$ Wasserstoff, $C_1$-$C_{12}$-Alkyl, $C_3$-$C_7$-Alkenyl, Cyclohexyl, $C_3$-$C_{12}$-Alkoxyalkyl, $C_5$-$C_{12}$-Alkenoxyalkyl, $C_4$-$C_{12}$-Dialkylaminoalkyl, eine Gruppe -$CH_2$-$CH(R^4)$-OH, Benzyl, eine Gruppe der Formel

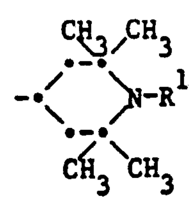

oder der Formel

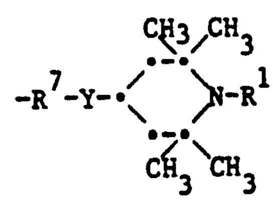

bedeutet,

$R^6$ Wasserstoff, $C_1$-$C_{12}$-Alkyl, $C_3$-$C_7$-Alkenyl, Cyclohexyl, eine Gruppe $-CH_2-CH(R^4)-OH$ oder eine Gruppe der Formel

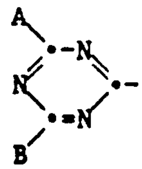

bedeutet,

$R^7$ $C_2$-$C_{12}$-Alkylen, das durch 1, 2 oder 3 der Gruppen -O- oder $-N(R^6)$-unterbrochen sein kann, $C_6$-$C_{14}$-Cycloalkylen oder Cycloalkylendialkylen bedeutet,

$R^4$ die in Anspruch 29 gegebene Bedeutung hat,

Y eine zweiwertige Gruppe der Formel -O- oder $-N(R^6)$- bedeutet und

A und B, unabhängig voneinander,

(a) eine Gruppe der Formel $R^8O$- oder $(R^9)$ $(R^{10})$ N- bedeuten, worin

$R^8$ $C^1$-$C^{12}$-Alkyl, $C^3$-$C^7$-Alkenyl, Cyclohexyl, Benzyl, Phenyl oder $C_7$-$C_{12}$-Alkylphenyl bedeutet,

$R^9$ $C_1$-$C_{12}$-Alkyl, $C_3$-$C_7$-Alkenyl, $C_5$-$C_8$-Cycloalkyl, $C_3$-$C_{12}$-Alkoxyalkyl, $C_5$-$C_{12}$-Alkenoxyalkyl, eine Gruppe $-CH_2-CH(R^4)-OH$, Phenyl, $C_7$-$C_{12}$-Alkylphenyl oder $C_7$-$C_{11}$-Phenylalkyl bedeutet und

$R^{10}$ Wasserstoff, $C_1$-$C_{12}$-Alkyl, $C_3$-$C_7$-Alkenyl, $C_5$-$C_8$-Cycloalkyl, $C_3$-$C_{12}$-Alkoxyalkyl, $C_5$-$C_{12}$-Alkenoxyalkyl, $C_2$-$C_{12}$-Alkanoyl, $C_3$-$C_{12}$-Alkenoyl, eine Gruppe $-CH_2-CH(R^4)-OH$ oder $C_7$-$C_{11}$-Phenylalkyl bedeutet, oder $R^9$ und $R^{10}$ zusammen mit dem N-Atom, an das sie gebunden sind, einen 5- oder 6-gliedrigen heterocyclischen Ring bilden, oder (b) eine Gruppe der Formel

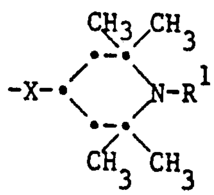

bedeuten,

wobei mindestens eine der Gruppen $R^1$, $R^2$, $R^3$, $R^5$, $R^6$, $R^8$, $R^9$ oder $R^{10}$ einen Alkenyl- oder Alkenoylrest darstellt.

31. Eine Verbindung der Formel II,

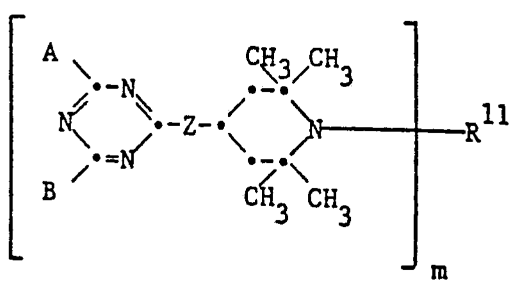

II

worin m 2, 3 oder 4 ist,

$R^{11}$ ein m-wertiger Rest ist und $C_2$-$C_{12}$-Alkylen, $C_4$-$C_8$-Alkenylen, Xylylen oder eine Gruppe $-CH_2-CH(OH)-CH_2-$, $-CH_2-CH(OH)-CH_2-D-CH_2-$, $-CH(OH)-CH_2-$, $-[-CH_2-CH(OH)-CH_2-]-_3T$ oder $-[-CH_2-CH(OH)-CH_2-]-_4$ Q ist, wobei D einen Rest $-O-R^{12}-O-$ oder $-OOC-R^{13}COO-$ bedeutet, worin $R^{12}$ und $R^{13}$ zweiwertige aliphatische, cycloaliphatische, aromatische oder araliphatische Reste bedeuten,

T eine dreiwertige aliphatische oder heterocyclische Gruppe bedeutet und Q eine vierwertige aliphatische Gruppe bedeutet,

Z eine zweiwertige Gruppe der Formel -O-, oder $-N(R^{14})$- ist, worin $R^{14}$ Wasserstoff, $C_1$-$C_{12}$-Alkyl, $C_3$-$C_7$-Alkenyl, Cyclohexyl, $C_2$-$C_4$-Hydroxyalkyl, $C_3$-$C_{12}$-Alkoxyalkyl, $C_5$-$C_{12}$-Alkenoxyalkyl, $C_4$-$C_{12}$-Dialkylaminoalkyl, oder Benzyl ist,

A und B, unabhängig voneinander,

(a) eine Gruppe der Formel $R^8O$- oder $(R^9)$ $(R^{10})N$- beuten, worin

$R^8$ $C_1$-$C_{12}$-Alkyl, $C_3$-$C_7$-Alkenyl, Cyclohexyl, Benzyl, Phenyl oder $C_7$-$C_{12}$-Alkylphenyl bedeutet,

$R^9$ $C_1$-$C_{12}$-Alkyl $C_3$-$C_8$-Alkenyl, $C_5$-$C_8$-Cycloalkyl, $C_3$-$C_{12}$-Alkoxyalkyl, $C_5$-$C_{12}$-Alkenoxyalkyl, eine Gruppe $-CH_2$-

$CH(R^4)-OH$, Phenyl, $C_7$-$C_{12}$-Alkylphenyl oder $C_7$-$C_{11}$-Phenylalkyl bedeutet und

$R^{10}$ Wasserstoff, $C_1$-$C_{12}$-Alkyl, $C_3$-$C_7$-Alkenyl, $C_5$-$C_8$-Cycloalkyl, $C_3$-$C_{12}$-Alkoxyalkyl, $C_5$-$C_{12}$-Alkenoxyalkyl, $C_2$-$C_{12}$-Alkanoyl, $C_3$-$C_{12}$-Alkenoyl, eine Gruppe $-C_2-CH(R^4)-OH$ oder $C_7$-$C_{11}$-Phenylalkyl bedeutet, oder $R^9$ und $R^{10}$ zusammen mit dem N-Atom, an das sie gebunden sind, einen 5- oder 6-gliedrigen heterocyclischen Ring bilden, oder (b) eine Gruppe der Formel

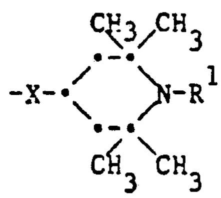

bedeuten,

wobei das Molekül mindestens eine Alkenyl- oder Alkenoylgruppe enthält.

32. Eine Verbindung gemäss Anspruch 31, worin A und B eine Gruppe der Formel $R^8O$- oder $(R^9)(R^{10})N$- sind und $R^8$ und $R^9$ Allyl sind.

33. Eine Verbindung der Formel III

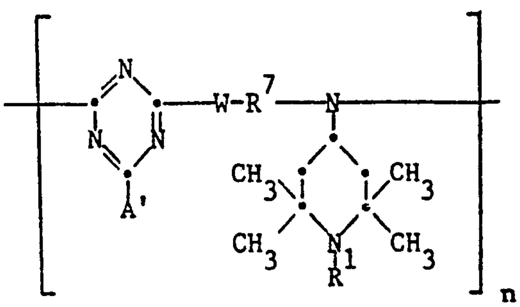

III

worin n ein Wert von 2 bis 20 ist,

A' eine Gruppe der Formel $R^8O$- oder $(R^9)(R^{10})N$- ist, worin $R^8$ und $R^9$ $C_3$-$C_7$-Alkenyl bedeuten und

$R^{10}$ Wasserstoff, $C_1$-$C_{12}$-Alkyl, $C_3$-$C_7$-Alkenyl, $C_5$-$C_8$-Cycloalkyl, $C_3$-$C_{12}$-Alkoxyalkyl, $C_5$-$C_{12}$-Alkenoxyalkyl, $C_2$-$C_{12}$-Alkanoyl, $C_3$-$C_{12}$-Alkenoyl, eine Gruppe $-CH_2-CH(R^4)-OH$ oder $C_7$-$C_{12}$-Phenylalkyl bedeutet,

W eine zweiwertige Gruppe der Formel -O- oder $-N(R^{16})$- ist, worin $R^{16}$ Wasserstoff, $C_1$-$C_{12}$-Alkyl, Cyclohexyl, Benzyl oder eine Gruppe der Formel

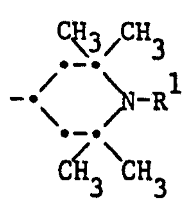

bedeutet,

$R^7$ $C_2$-$C_{12}$-Alkylen, das durch 1, 2 oder 3 der Gruppen -O- oder $-N(R^6)$- unterbrochen sein kann, $C_6$-$C_{14}$-Cycloalkylen oder Cycloalkylendialkylen bedeutet, worin

$R^6$ Wasserstoff, $C_1$-$C_{12}$-Alkyl, Cyclohexyl, oder eine Gruppe $-CH_2-CH(R^4)-OH$ bedeutet, und

$R^1$ Wasserstoff, $C_1$-$C_{12}$-Alkyl, $C_3$-$C_7$-Alkenyl, $C_7$-$C_{11}$-Phenylalkyl, Cyanomethyl, $C_2$-$C_{18}$-Alkanoyl oder $C_3$-$C_{18}$-Alkenoyl, eine Gruppe $-CON(R^2)(R^3)$ oder eine Gruppe $-CH_2-CH(R^4)-OH$ bedeutet, worin

$R^2$ $C_1$-$C_{12}$-Alkyl, Allyl, Cyclohexyl, Benzyl, Phenyl oder $C_7$-$C_{12}$-Alkylphenyl und

$R^3$ Wasserstoff, $C_1$-$C_{12}$-Alkyl, Allyl oder Benzyl bedeuten oder

$R^2$ und $R^3$ zusammen mit dem N-Atom, an das sie gebunden sind, eine 5-oder 6-gliedrigen heterocyclischen Ring bilden, und

$R^4$ Wasserstoff, $C_1$-$C_{12}$-Alkyl, Phenyl, $C_2$-$C_{13}$-Alkoxymethyl oder Phenoxymethyl bedeutet.

34. Eine Verbindung gemäss Anspruch 33, worin A' eine Allylamino- oder Diallylaminogruppe ist.

35. Eine Verbindung der Formel IV,

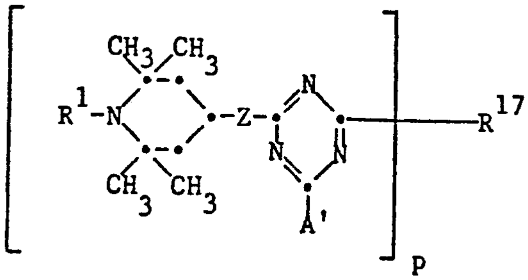

IV

worin $R^1$ die in Anspruch 29 gegebene Bedeutung hat, Z die in Anspruch 31 gegebene Bedeutung hat, A' eine Gruppe $(R^9)(R^{10})N$- ist, worin $R^9$ $C_3$-$C_7$ -Alkenyl und $R^{10}$ $C_1$-$C_{12}$-Alkyl, Cyclohexyl, Hydroxyethyl, Benzyl, $C_2$-$C_{12}$-Alkanoyl oder $C_3$-$C_5$-Alkenoyl bedeuten, p 2, 3 oder 4 ist und $R^{17}$ der p-wertige Rest eines Polyols oder eines Polyamins ist.

36. Eine Verbindung der Formel IV, worin $R^1$ $C_3$-$C_7$-Alkenyl, $C_7$-$C_{11}$-Phenylalkyl, Cyanomethyl, $C_2$-$C_{18}$-Alkanoyl, $C_3$-$C_{18}$-Alkenoyl oder -$CON(R^2)(R^3)$ bedeutet und $R^2$ und $R^3$ die in Anspruch 33 gegebene Bedeutung haben, A' eine Gruppe $R^8O$- oder $(R^9)(R^{10})N$- ist, worin $R^8$ und $R^9$ $C_3$-$C_7$-Alkenyl bedeuten, $R^{10}$ Wasserstoff, $C_1$-$C_{12}$-Alkyl, $C_3$-$C_7$-Alkenyl, $C_5$-$C_8$-Cycloalkyl, $C_3$-$C_{12}$-Alkoxyalkyl, $C_5$-$C_{12}$-Alkenoxyalkyl, $C_2$-$C_{12}$-Alkanoyl, $C_3$-$C_{12}$-Alkenoyl, eine Gruppe -$CH_2H$ -$CH(R^4)$-OH oder $C_7$-$C_{11}$-Phenylalkyl bedeutet und $R^4$ Wasserstoff, $C_1$-$C_{12}$-Alkyl, Phenyl, $C_2$-$C_{13}$- Alkoxymethyl oder Phenoxymethyl bedeutet, Z die in Anspruch 35 gegebene Bedeutung hat, p 2, 3 oder 4 ist und $R^{17}$ der p-wertige Rest eines Polyols oder Polyamins ist.

## Claims

1. A process for chemically bonding polyalkylpiperidine stabilisers to polymers by grafting ethylenically unsaturated polyalkylpiperidine derivatives, by the action of free radicals produced by chemical or physical means, onto the polymer to be stabilised, which comprises using as the stabiliser an s-triazine compound, the molecule of which contains at least one ethylenically unsaturated group and at least one 2,2,6,6-tetramethylpiperidine group.

2. A process according to claim 1, wherein the stabiliser used is an s-triazine compound which, in addition to at least one 2,2,6,6-tetramethylpiperidine group, also contains at least two ethylenically unsaturated groups, which makes it possible to crosslink the polymer.

3. A process according to claim 1, wherein the polymer to be stabilised is a polyolefine or an olefine copolymer.

4. A process according to claim 3, wherein the polymer is polypropylene.

5. A process according to claim 3, wherein the polymer is polyethylene or chlorinated polyethylene.

6. A process according to claim 1, wherein the free radicals are produced by adding a free-radical former to the polymer and by heating the polymer above the decomposition temperature of the free-radical former.

7. A process according to claim 6, wherein the free-radical former used is an organic peroxy compound.

8. A process according to claim 6, wherein the free-radical former used is an aliphatic azo compound.

9. A process according to claim 1 wherein the free radicals are produced by irradiating the polymer with high-energy radiation, in particular electron radiation or γ-rays.

10. A process according to claim 1, wherein a phenolic antioxidant is added to the polymer in addition to the piperidine-triazine stabiliser.

11. A process according to claim 10, wherein the antioxidant added is a derivative of β-(3,5-di-t.-butyl-4-hydroxyphenyl)-propionic acid, in particular the octadecyl ester thereof.

12. A process according to claim 1, wherein the stabiliser used is a compound of the general formula I

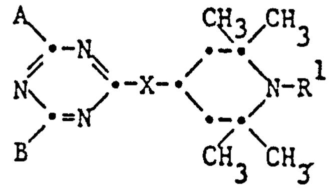

I

in which $R^1$ is hydrogen, oxyl oxygen, $C_1$-$C_{12}$alkyl, $C_3$-$C_7$alkenyl, $C_7$-$C_{11}$phenylalkyl, cyanomethyl, $C_2$-$C_{18}$ alkanoyl or $C_3$-$C_{18}$alkenoyl or a group -CON($R^2$)($R^3$) or -$CH_2$-CH($R^4$) in which $R^2$ is $C_1$-$C_{12}$alkyl, allyl, cyclohexyl, benzyl, phenyl or $C_7$-$C_{12}$alkylphenyl and $R^3$ is hydrogen, $C_1$-$C_{12}$alkyl, allyl or benzyl or $R^2$ and $R^3$, together with the N atom to which they are attached, form a 5-membered or 6-membered heterocyclic ring and $R^4$ is hydrogen, $C_1$-$C_{12}$-alkyl, phenyl, $C_2$-$C_{13}$alkoxymethyl or phenoxymethyl, X is a divalent group of the formula -O-, -N($R^5$)- -NH-$CH_2$-$CH_2$-, -NH-$(CH_2)_2$-O-, -NH$(CH_2)_3$-O- or -N($R^5$)-$R^7$-N($R^6$)- in which $R^5$ is hydrogen, $C_1$-$C_{12}$alkyl, $C_3$-$C_7$alkenyl, cyclohexyl, $C_3$-$C_{12}$alkoxyalkyl, $C_5$-$C_{12}$alkenoxyalkyl, $C_4$-$C_{12}$dialkylaminoalkyl, a group -$CH_2$-CH($R^4$)-OH, benzyl or a group of the formula

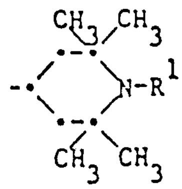

or of the formula

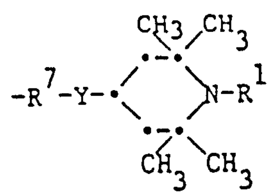

$R^6$ is hydrogen, $C_1$-$C_{12}$alkyl, $C_3$-$C_7$alkenyl, cyclohexyl, a group -$CH_2$-CH($R^4$)-OH are group of the formula

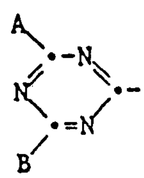

$R^7$ is $C_2$-$C_{12}$alkylene which can be interrupted by 1, 2 or 3 of the groups -O- or -N($R^6$)- $C_6$-$C_{14}$cycloalkylene or cycloalkylenedialkylene, Y is a divalent group of the formula -O- or -N($R^6$)-and A and B, independently of one another, (a) are a group of the formula $R^8$O- or ($R^9$)($R^{10}$)N- in which $R^8$ is $C_1$-$C_{12}$alkyl, $C_3$-$C_7$alkenyl, $C_3$-$C_{12}$alkoxyalkyl, $C_4$-$C_{12}$dialkylaminoalkyl, cyclohexyl, benzyl, phenyl or $C_7$-$C_{12}$alkylphenyl, $R^9$ is $C_1$-$C_{12}$alkyl, $C_3$-$C_7$alkenyl, $C_5$-$C_8$cycloalkyl, $C_3$-$C_{12}$alkoxyalkyl, $C_5$-$C_{12}$alkenoxyalkyl, $C_4$-$C_{12}$dialkylaminoalkyl, a group -$CH_2$-CH($R^4$)-OH, phenyl, $C_7$-$C_{12}$alkylphenyl or $C_7$-$C_{11}$phenylalkyl and $R^{10}$ is hydrogen, $C_1$-$C_{12}$alkyl, $C_3$-$C_7$alkenyl, $C_5$-$C_8$cycloalkyl, $C_3$-$C_{12}$alkoxyalkyl, $C_5$-$C_{12}$alkenoxyalkyl, $C_4$-$C_{12}$dialkylaminoalkyl, $C_2$-$C_{12}$alkanoyl, $C_3$-$C_{12}$alkenoyl, a group -$CH_2$-CH($R^4$)-OH or $C_7$-$C_{11}$phenylalkyl, or $R^9$ and $R^{10}$, together with the N atom to which they are attached, form a 5-membered or 6-membered heterocyclic ring, or (b) are a group of the formula

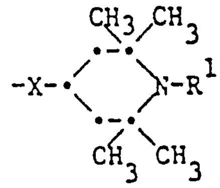

in which at least one of the groups $R^1$, $R^2$, $R^3$, $R^5$, $R^6$, $R^8$, $R^9$ or $R^{10}$ is an alkenyl or alkenoyl radical.

13. A process according to claim 12, wherein at least two of the groups $R^1$, $R^2$, $R^3$, $R^5$, $R^6$, $R^8$, $R^9$ or $R^{10}$ in formula I are an alkenyl or alkenoyl radical.

14. A process according to claim 12, wherein the substituent A or the substituents A and B in formula I are a group of the formula $R^8O$- or $(R^9)(R^{10})N$- in which $R^8$ and $R^9$ are $C_3$-$C_7$alkenyl.

15. A process according to claim 14, wherein A and B are a group of the formula $R^8O$- or $(R^9)(R^1)N$- in which $R^8$ and $R^9$ are allyl.

16. A process according to claim 12, wherein the substituent A in formula I is a group $(R^{9'})(R^{10'})N$- in which $R^{9'}$ is $C_3$-$C_7$alkenyl and $R^{10'}$ is $C_1$-$C_{12}$alkyl, cyclohexyl, hydroxyethyl, benzyl, $C_2$-$C_{12}$alkanoyl or $C_3$-$C_5$alkenoyl.

17. A process according to claim 15, wherein the substituents A and B in formula I are a group $R^8O$- or $(R^9)(R^{10})N$- in which $R^8$ and $R^9$ are allyl and X is a group -$N(R^5)$- in which $R^5$ is a group of the formula

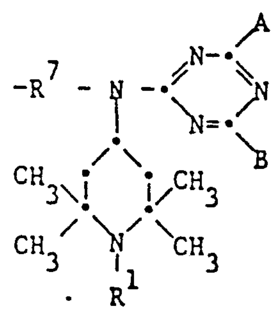

and $R^1$, $R^7$ and $R^{10}$ are as defined in claim 12.

18. A process according to claim 12, wherein $R^1$ in formula I is $C_3$-$C_7$alkenyl, $C_7$-$C_{11}$phenylalkyl, cyanomethyl, $C_2$-$C_{18}$alkanoyl, $C_3$-$C_{18}$alkenoyl or -$CON(R^2)(R^3)$.

19. A process according to claim 1, wherein the stabiliser used is a compound of the general formula II

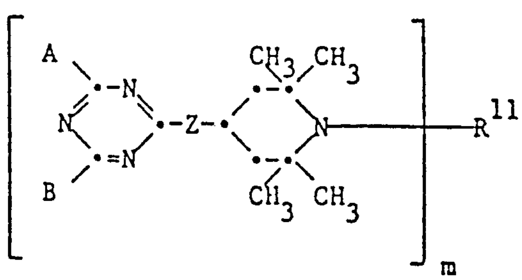

II

in which m is 2, 3 or 4, $R^{11}$ is an m-valent radical and is $C_2$-$C_{12}$-alkylene, $C_4$-$C_8$alkenylene, xylylene or a group $-CH_2-CH(OH)-CH_2-$, $-CH_2-CH(OH)-CH_2-D-CH_2-$, $-CH(OH)-CH_2-$, $-[-CH_2-CH(OH)-CH_2-]-_3T$ or $-[-CH_2-CH(OH)-CH_2-]-_4Q$ in which D is a radical $-O-R^{12}-O-$ or $-OOC-R^{13}COO-$ in which $R^{12}$ and $R^{13}$ are divalent aliphatic, cycloaliphatic, aromatic or araliphatic radicals, T is a trivalent aliphatic or heterocyclic group and Q is a tetravalent aliphatic group, Z is a divalent group of the formula -O- or -$N(R^{14})$- in which $R^{14}$ is hydrogen, $C_1$-$C_{12}$alkyl, $C_3$-$C_7$alkenyl, cyclohexyl, $C_2$-$C_4$hydroxyalkyl, $C_3$-$C_{12}$alkoxyalkyl, $C_5$-$C_{12}$alkenoxyalkyl, $C_4$-$C_{12}$dialkylaminoalkyl or benzyl, and A and B are as defined in claim 12, the molecule containing at least one alkenyl or alkenoyl group.

20. A process according to claim 19, wherein the molecule contains at least two alkenyl or alkenoyl groups.

21. A process according to claim 19, wherein the substituent A in formula II is a group $R^8O$- or $(R^9)(R^{10})N$- in which $R^8$ and $R^9$ are a $C_3$-$C_7$alkenyl group and R is as defined in claim 12.

22. A process according to claim 21, wherein A and B in formula II are a group of the formula $R^8O$- or $(R^9)(R^{10})N$- and $R^8$ and $R^9$ are allyl.

23. A process according to claim 1, wherein the stabiliser used is a compound of the formula III

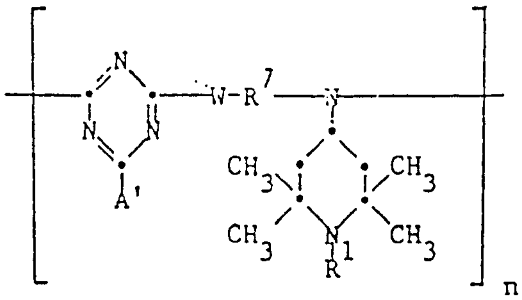

III

in which n has a value from 2 to 20, A' is a group of the formula $R^8O$- or $(R^9)(R^{10})N$- in which $R^8$ and $R^9$ are $C_3$-$C_7$alkenyl, W is a divalent group of the formula -O- or $-N(R^{16})$- in which $R^{16}$ is hydrogen, $C_1$-$C_{12}$alkyl, $C_3$-$C_7$-alkenyl, cyclohexyl, benzyl or a group of the formula

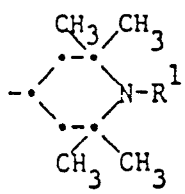

and $R^1$, $R^7$ and $R^{10}$ are as defined in claim 12.

24. A process according to claim 23, wherein the substituent A' in formula III is an allylamino or diallylamino group.

25. A process according to clalm 1, wherein the stabiliser used is a compound of the formula IV

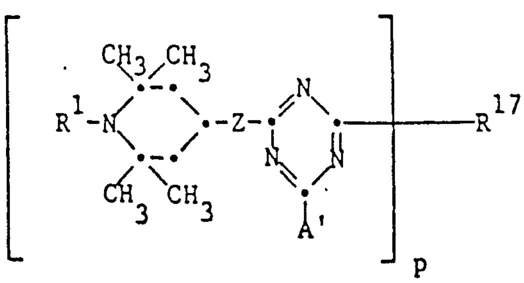

IV

in which $R^1$ is as defined in claim 12, Z is as defined in claim 20, A' is as defined in claim 24, p is 2, 3 or 4 and $R^{17}$ is the p-valent radical of a polyol or polyamine.

26. A process according to claim 25, wherein the substituent A' in formula IV is an allyloxy, allylamino or diallylamino group.

27. A process according to claim 25, wherein the substituent A' in formula IV is a group $(R^9)(R^{10})N$- and $R^{10}$ is $C_1$-$C_{12}$alkyl, cyclohexyl, hydroxyethyl, benzyl, $C_2$-$C_{12}$alkanoyl or $C_3$-$C_5$-alkenoyl.

28. A process according to claim 25, wherein $R^1$ in formula IV is $C_3$-$C_7$alkenyl, $C_7$-$C_{11}$phenylalkyl, cyanomethyl, $C_2$-$C_{18}$alkanoyl, $C_3$-$C_{18}$alkenoyl or $-CON(R^2)(R^3)$ and $R^2$ and $R^3$ are as defined in claim 1.

29. A compound of the general formula I

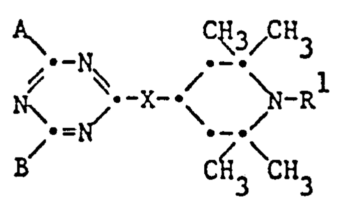

I

in which $R^1$ is hydrogen, $C_1$-$C_{12}$alkyl, $C_3$-$C_7$alkenyl, $C_7$-$C_{11}$phenylalkyl, cyanomethyl, $C_2$-$C_{18}$alkanoyl or $C_3$-$C_{18}$alkenoyl or a group $-CON(R^2)(R^3)$ or $-CH_2$-$CH(R^4)$-OH in which $R^2$ is $C_1$-$C_{12}$alkyl, allyl, cyclohexyl, benzyl, phenyl or $C_7$-$C_{12}$alkylphenyl and $R^3$ is hydrogen, $C_1$-$C_{12}$alkyl, allyl or benzyl or $R^2$ and $R^3$, together with the N atom to which they are attached, form a 5-membered or 6-membered heterocyclic ring and $R^4$ is hydrogen, $C_1$-$C_{12}$alkyl, phenyl, $C_2$-$C_{13}$alkoxymethyl or phenoxymethyl, X is a divalent group of the formula -O-, $-N(R^5)$-, -NH-

$CH_2$-$CH_2$-, -NH-$(CH_2)_2$-O-, -NH-$(CH_2)_3$-O- or -N($R^5$)-$R^7$-N($R^6$)- in which $R^5$ is hydrogrn, $C_1$-$C_{12}$alkyl, $C_3$-$C_7$alkenyl, cyclohexyl, $C_3$-$C_{12}$-alkoxyalkyl, $C_5$-$C_{12}$alkenoxyalkyl, $C_4$-$C_{12}$dialkylaminoalkyl, a group -$CH^2$-CH($R^4$)-OH, benzyl or a group of the formula

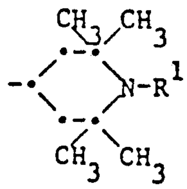

or of the formula

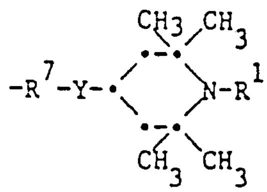

$R^6$ is hydrogen, $C_1$-$C_{12}$alkyl, $C_3$-$C_7$alkenyl, cyclohexyl, a group -$CH_2$-CH($R^4$)-OH or a group of the formula

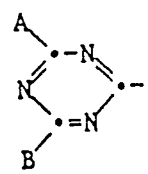

$R^7$ is $C_2$-$C_{12}$alkylene which can be interrupted by 1, 2 or 3 of the groups -O- or -N($R^6$)-, $C_6$-$C_{14}$cycloalkylene or cycloalkylenedialkylene, Y is a divalent group of the formula -O-or -N($R^6$)-, A is a group of the formula ($R^{9'}$)($R^{10'}$)N-in which $R^{9'}$ is a $C_3$-$C_7$alkenyl group and $R^{10'}$ is $C_1$-$C_{12}$alkyl, hydroxyethyl, cyclohexyl, benzyl, $C_2$-$C_{12}$alkanoyl or $C_3$-$C_5$-alkenoyl and B is either

(a) a group of the formula $R^8$O- or ($R^9$)($R^{10}$)N- in which $R^8$ is $C_1$-$C_{12}$alkyl, $C_3$-$C_7$alkenyl, $C_3$-$C_{12}$alkoxyalkyl, $C_4$-$C_{12}$dialkylaminoalkyl, cyclohexyl, benzyl, phenyl or $C_7$-$C_{12}$alkylphenyl, $R^9$ is $C_1$-$C_{12}$alkyl, $C_3$-$C_7$alkenyl, $C_5$-$C_8$cycloalkyl, $C_3$-$C_{12}$alkoxyalkyl, $C_4$-$C_{12}$alkenoxyalkyl, $C_4$-$C_{12}$dialkylaminoalkyl, a group -$CH_2$-CH($R^4$)-OH, phenyl, $C_7$-$C_{12}$alkylphenyl or $C_7$-$C_{11}$phenylalkyl and $R^{10}$ is hydrogen, $C_1$-$C_{12}$alkyl, $C_3$-$C_7$alkenyl, $C_5$-$C_8$cycloalkyl, $C_3$-$C_{12}$alkoxyalkyl, $C_5$-$C_{12}$alkenoxyalkyl, $C_4$-$C_{12}$dialkylaminoalkyl, $C_2$-$C_{12}$alkanoyl, $C_3$-$C_{12}$alkenoyl, a group -$CH_2$-CH($R^4$)-OH or $C_7$-$C_{11}$phenylalkyl or $R^9$ and $R^{10}$, together with the N atom to which they are attached, form a 5-membered or 6-membered heterocyclic ring, or

(b) a group of the formula

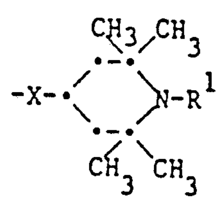

30. A compound of the general formula I

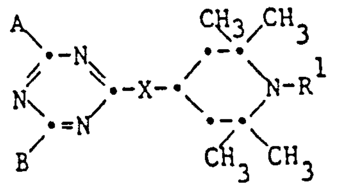

I

in which $R^1$ is $C_3$-$C_7$alkenyl, $C_7$-$C_{11}$phenylalkyl, cyanomethyl, $C_2$-$C_{18}$alkanoyl, $C_3$-$C_{18}$alkenoyl or a group -CON-($R^2$)($R^3$) in which $R^2$ is $C_1$-$C_{12}$alkyl, allyl, cyclohexyl, benzyl, phenyl or $C_7$-$C_{12}$alkylphenyl and $R^3$ is hydrogen, $C_1$-$C_{12}$alkyl, allyl or benzyl or $R^2$ and $R^3$, together with the N atom to which they are attched, form a 5-membered or 6-membered heterocyclic ring, X is a divalent group of the formula -O-, -N($R^5$)-, -NH-$CH_2$-$CH_2$- -NH-$(CH_2)_2$-O-, -NH-$(CH_2)_3$-O- or -N($R^5$)-$R^7$-N($R^6$)- in which $R^5$ is hydrogen $C_1$-$C_{12}$alkyl, $C_3$-$C_7$alkenyl, cyclohexyl, $C_3$-$C_{12}$alkoxyalkyl, $C_5$-$C_{12}$alkenoxyalkyl, $C_4$-$C_{12}$dialkylaminoalkyl, a group -$CH_2$-CH($R^4$)-OH, benzyl or a group of the formula

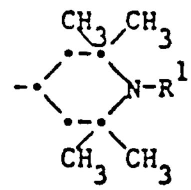

or of the formula

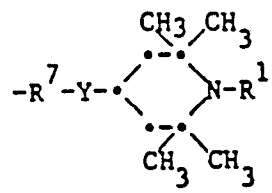

$R^6$ is hydrogen, $C_1$-$C_{12}$alkyl, $C_3$-$C_7$alkenyl, cyclohexyl, a group - $CH_2$-CH($R^4$)-OH or a group of the formula

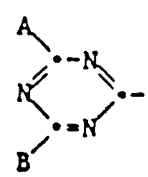

$R^7$ is $C_2$-$C_{12}$alkylene which can be interrupted by 1, 2 or 3 of the groups -O- or -N($R^6$)-, $C_6$-$C_{14}$cycloalkylene or cycloalkylenedialkylene, $R^4$ is as defined in claim 29, Y is a divalent group of the formula -O- or -N($R^6$)-and A and B independently of one another are

(a) a group of the formula $R^8$O- or ($R^9$)($R^{10}$)N- in which $R^8$ is $C_1$-$C_{12}$alkyl, $C_3$-$C_7$alkenyl, cyclohexyl, benzyl, phenyl or $C_7$-$C_{12}$alkylphenyl,

$R^9$ is $C_1$-$C_{12}$alkyl, $C_3$-$C_7$alkenyl, $C_5$-$C_8$cycloalkyl, $C_3$-$C_{12}$alkoxyalkyl, $C_5$-$C_{12}$-alkenoxyalkyl, a group -$CH_2$-CH($R^4$)-OH, phenyl, $C_7$-$C_{12}$alkylphenyl or $C_7$-$C_{11}$phenylalkyl and $R^{10}$ is hydrogen, $C_1$-$C_{12}$ alkyl, $C_3$-$C_7$alkenyl, $C_5$-$C_8$cycloalkyl, $C_3$-$C_{12}$alkoxyalkyl, $C_5$-$C_{12}$alkenoxyalkyl, $C_2$-$C_{12}$alkanoyl, $C_3$-$C_{12}$alkenoyl, a group -$CH_2$-CH($R^4$)-OH or $C_7$-$C_{11}$phenylalkyl, or $R^9$ and $R^{10}$ together with the N atom to which they are attached, form a 5-membered or 6-membered heterocyclic ring, or

(b) a group of the formula

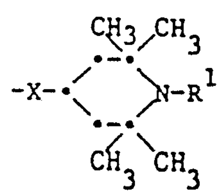

at least one of the groups $R^1$, $R^2$, $R^3$, $R^5$, $R^6$, $R^8$, $R^9$ or $R^{10}$ being an alkenyl or alkenoyl radical.

31. A compound of the formula II

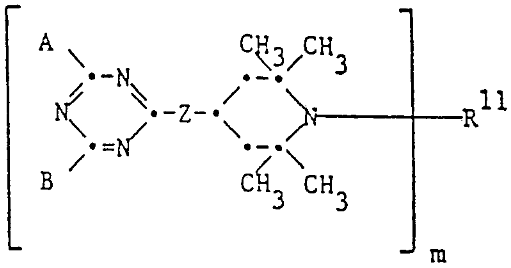

II

in which m is 2, 3 or 4, $R^{11}$ is an m-valent radical and is $C_2$-$C_{12}$alkylene, $C_4$-$C_8$alkenylene, xylylene or a group $-CH_2-CH(OH)-CH_2-$ $-CH_2-CH(OH)-CH_2-D-CH_2-$, $-CH(OH)-CH_2-$, $-[-CH_2CH(OH)-CH_2-]-_3$ T or $[CH_2-CH(OH)-CH_2]_4Q$ in which D is a radical $-O-R^{12}-O-$ or $-OOC-R^{13}COO-$in which $R^{12}$ and $R^{13}$ are divalent aliphatic, cycloaliphatic, aromatic or araliphatic radicals, T is a trivalent aliphatic or heterocyclic group and Q is a tetravalent aliphatic group, Z is a divalent group of the formula -O- or $-N(R^{14})$-in which $R^{14}$ is hydrogen, $C_1$-$C_{12}$alkyl, $C_3$-$C_7$alkenyl, cyclohexyl, $C_2$-$C_4$hydroxyalkyl, $C_3$-$C_{12}$alkoxyalkyl, $C_5$-$C_{12}$alkenoxyalkyl, $C_4$-$C_{12}$dialkyl-aminoalkyl or benzyl and A and B independently of one another are (a) a group of the formula $R^8O$- or $(R^9)(R^{10})N$- in which $R^8$ is $C_1$-$C_{12}$alkyl, $C_3$-$C_7$alkenyl, cyclohexyl, benzyl, phenyl or $C_7$-$C_{12}$alkylphenyl, $R^9$ is $C_1$-$C_{12}$alkyl, $C_3$-$C_7$alkenyl, $C_5$-$C_8$cycloalkyl, $C_3$-$C_{12}$alkoxyalkyl, $C_5$-$C_{12}$alkenoxyalkyl, a group $-CH_2-CH(R^4)-OH$, phenyl, $C_7$-$C_{12}$-alkylphenyl or $C_7$-$C_{11}$phenylalkyl and $R^{10}$ is hydrogen, $C_1$-$C_{12}$alkyl, $C_3$-$C_7$-alkenyl, $C_5$-$C_8$cycloalkyl, $C_3$-$C_{12}$alkoxyalkyl, $C_5$-$C_{12}$alkenoxyalkyl, $C_2$-$C_{12}$-alkanoyl, $C_3$-$C_{12}$alkenoyl, a group $-CH_2-CH(R^4)-OH$ or $C_7$-$C_{11}$phenylalkyl, or $R^9$ and $R^{10}$, together with the N atom to which they are attached, form a 5-membered or 6-membered heterocyclic ring, or (b) a group of the formula

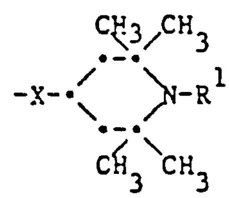

the molecule containing at least one alkenyl or alkenoyl group.

32. A compound according to claim 31, wherein A and B are a group of the formula $R^8O$- or $(R^9)(R^{10})N$- and $R^8$ and $R^9$ are allyl.

33. A compound of the formula III

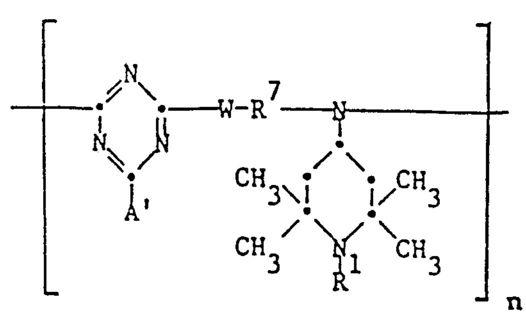

III

in which n is a value from 2 to 20, A' is a group of the formula $R^8O$- or $(R^9)(R^{10})N$- in which $R^8$ and $R^9$ are $C_3$-$C_7$-alkenyl and $R^{10}$ is hydrogen, $C_1$-$C_{12}$alkyl, $C_3$-$C_7$alkenyl, $C_5$-$C_8$cycloalkyl, $C_3$-$C_{12}$-alkoxyalkyl, $C_5$-$C_{12}$alkenoxyalkyl

$C_2$-$C_{12}$alkanoyl, $C_3$-$C_{12}$alkenoyl, a group -$CH_2$-CH($R^4$)-OH or $C_7$-$C_{12}$phenylalkyl, W is a divalent group of the formula -O- or -N($R^{16}$)- in which $R^{16}$ is hydrogen, $C_1$-$C_{12}$alkyl, cyclohexyl, benzyl or a group of the formula

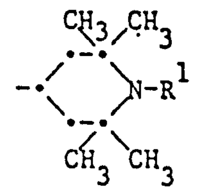

$R^7$ is $C_2$-$C_{12}$alkylene which can be interrupted by 1, 2 or 3 of the groups -O- or -N($R^6$)-, $C_6$-$C_{14}$cycloalkylene or cycloalkylenedialkylene in which $R^6$ is hydrogen, $C_1$-$C_{12}$alkyl, cyclohexyl or a group -$CH_2$-CH($R^4$)-OH and $R^1$ is hydrogen, $C_1$-$C_{12}$alkyl, $C_3$-$C_7$alkenyl, $C_7$-$C_{11}$phenylalkyl, cyanomethyl, $C_2$-$C_{18}$alkanoyl or $C_3$-$C_{18}$alkenoyl or a group -CON($R^2$)-($R^3$) or a group -$CH_2$-CH($R^4$)-OH in which $R^2$ is $C_1$-$C_{12}$alkyl, allyl, cyclohexyl, benzyl, phenyl or $C_7$-$C_{12}$alkylphenyl and $R^3$ is hydrogen, $C_1$-$C_{12}$alkyl, allyl or benzyl or $R^2$ and $R^3$ together with the N atom to which they are attached, form a 5-membered or 6-membered heterocyclic ring and $R^4$ is hydrogen, $C_1$-$C_{12}$alkyl, phenyl, $C_2$-$C_{13}$alkoxymethyl or phenoxymethyl.

34. A compound according to claim 33 in which A' is an allylamino or diallylamino group.

35. A compound of the formula IV

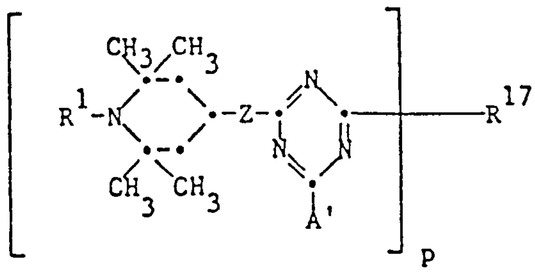

(IV)

in which $R^1$ is as defined in claim 29, Z is as defined in claim 31, A' is a group ($R^9$)($R^{10}$)N- in which $R^9$ is $C_3$-$C_7$-alkenyl and $R^{10}$ is $C_1$-$C_{12}$alkyl, cyclohexyl, hydroxyethyl, benzyl, $C_2$-$C_{12}$alkanoyl or $C_3$-$C_5$-alkenoyl, p is 2, 3 or 4 and $R^{17}$ is the p-valent radical of a polyol or polyamine.

36. A compound of the formula IV in which $R^1$ is $C_3$-$C_7$alkenyl, $C_7$-$C_{11}$phenylalkyl, cyanomethyl, $C_2$-$C_{18}$alkanoyl, $C_3$-$C_{18}$alkenoyl or - CON($R^2$)($R^3$) and $R^2$ and $R^3$ are as defined in claim 33, A' is a group $R^8$O- or ($R^9$)($R^{10}$)N- in which $R^8$ and $R^9$ are $C_3$-$C_7$alkenyl and $R^{10}$ is hydrogen, $C_1$-$C_{12}$alkyl, $C_3$-$C_7$alkenyl, $C_5$-$C_8$cycloalkyl, $C_3$-$C_{12}$alkoxyalkyl, $C_5$-$C_{12}$alkenoxyalkyl, $C_2$-$C_{12}$alkanoyl, $C_3$-$C_{12}$alkenoyl or a group -$CH_2$-CH($R^4$)-OH or $C_7$-$C_{11}$phenylalkyl and $R^4$ is hydrogen, $C_1$-$C_{12}$alkyl, phenyl, $C_2$-$C_{13}$alkoxymethyl or phenoxymethyl, Z is as defined in claim 35, p is 2, 3 or 4 and $R^{17}$ is the p-valent radical of a polyol or polyamine.

## Revendications

1. Procédé pour unir chimiquement des stabilisants polyalkyl-pipéridiniques à des polymères par greffage, sur le polymère à stabiliser, de composés polyalkyl-pipéridiniques éthyléniques, sous l'action de radicaux libres créés chimiquement ou physiquement, procédé caractérisé en ce qu'on utilise, comme stabilisant, un composé s-triazinique dont la molécule contient au moins un radical éthylénique et au moins un radical tétraméthyl-2,2,6,6 pipéridinique.

2. Procédé selon la revendication 1 caractérisé en ce qu'on utilise, comme stabilisant, un composé s-triazinique qui, en plus d'au moins un radical tétraméthyl-2,2,6,6 pipéridinique, contient au moins deux radicaux éthyléniques, ce qui permet de réaliser une réticulation du polymère.

3. Procédé selon la revendication 1 caractérisé en ce que le polymère à stabiliser est une polyoléfine ou un copolymère d'oléfines.

4. Procédé selon la revendication 3 caractérisé en ce que le polymère est un polypropylène.

5. Procédé selon la revendication 3 caractérisé en ce que le polymère est un polyéthylène ou un polyéthylène chloré.

6. Procédé selon la revendication 1 caractérisé en ce que les radicaux sont créés par addition d'un générateur de radicaux au polymère et chauffage du polymère à une température supérieure à la température de décomposition du générateur de radicaux.

7. Procédé selon la revendication 6 caractérisé en ce qu'on utilise, comme générateur de radicaux, un composé peroxydique organique.

8. Procédé selon la revendication 6 caractérisé en ce qu'on utilise, comme générateur de radicaux, un composé azoïque aliphatique.

9. Procédé selon la revendication 1 caractérisé en ce qu'on crée les radicaux en exposant le polymère à un rayonnement de haute énergie, en particulier à des rayons électroniques ou à des rayons $\gamma$.

10. Procédé selon la revendication 1 caractérisé en ce qu'on ajoute au polymère, en plus du stabilisant pipéridinique-triazinique, un anti-oxydant phénolique.

11. Procédé selon la revendication 10 caractérisé en ce qu'on ajoute, comme anti-oxydant, un dérivé de l'acide (di-tert-butyl-3,5 hydroxy-4 phényl)-3 propionique, plus particulièrement son ester octadécylique.

12. Procédé selon la revendication 1 caractérisé en ce qu'on utilise, comme stabilisant, un composé répondant à la formule générale I:

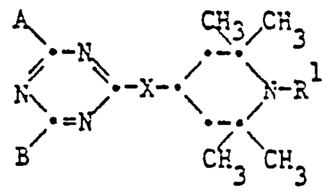

I

dans laquelle:

$R^1$ représente l'hydrogène, un oxygène oxylé, un alkyle en $C_1$-$C_{12}$, un alcényle en $C_3$-$C_7$, un phénylalkyle en $C_7$-$C_{11}$, un cyanométhyle, un alcanoyle en $C_2$-$C_{18}$ ou un alcénoyle en $C_3$-$C_{18}$, un radical $-CON(R^2)(R^3)$ ou un radical $-CH_2-CH(R^4)-OH$, dans lesquels $R^2$ représente un alkyle en $C_1$-$C_{12}$, un allyle, un cyclohexyle, un benzyle, un phényle ou un alkylphényle en $C_7$-$C_{12}$, $R^3$ représente l'hydrogène, un alkyle en $C_1$-$C_{12}$, un allyle ou un benzyle, ou $R^2$ et $R^3$ forment ensemble, et avec l'atome d'azote auquel ils sont liés, un hétérocycle à 5 ou 6 maillons, et $R^4$ représente l'hydrogène, un alkyle en $C_1$-$C_{12}$, un phényle, un alcoxyméthyle en $C_2$-$C_{13}$ ou un phénoxyméthyle,

X représente un radical bivalent répondant à l'une des formules: -O-, $-N(R^5)-$, $-NH-CH_2-CH_2-$ NH $(CH_2)_2-O-$, $-NH(CH_2)_3-O-$ et $-N(R^5)-R^7-N(R^6)-$ dans lesquelles $R^5$ représente l'hydrogène, un alkyle en $C_1$-$C_{12}$, un alcényle en $C_3$-$C_7$, un cyclohexyle, un alcoxyalkyle en $C_3$-$C_{12}$, un alcényloxyalkyle en $C_5$-$C_{12}$, un dialkylaminoalkyle en $C_4$-$C_{12}$, un radical $-CH_2-CH(R^4)-OH$, un benzyle, un radical de formule:

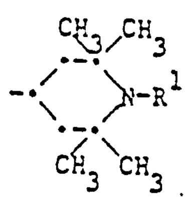

ou de formule:

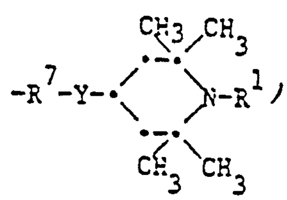

$R^6$ représente l'hydrogène, un alkyle en $C_1$-$C_{12}$, un alcényle en $C_3$-$C_7$, un cyclohexyle, un radical $-CH_2-CH(R^4)-OH$ ou un radical de formule:

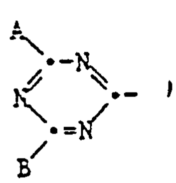

$R^7$ représente un alkylène en $C_2$-$C_{12}$, éventuellement interrompu par un, deux ou trois des radicaux -O- et -N($R^6$)-, un cycloalkylène en $C_6$-$C_{14}$ ou un cycloalkylène-dialkylène, et Y représente un radical bivalent de formule -O- ou -N($R^6$)-, et

A et B représentent chacun, indépendamment l'un de l'autre:

(a) un radical répondant à l'une des formules $R^8O$- et ($R^9$)($R^{10}$)N- dans lesquelles $R^8$ représente un alkyle en $C_1$-$C_{12}$, un alcényle en $C_3$-$C_7$, un alcoxyalkyle en $C_3$-$C_{12}$, un dialkylamino-alkyle en $C_4$-$C_{12}$, un cyclohexyle, un benzyle, un phényle ou un alkylphényle en $C_7$-$C_{12}$, $R^9$ représente un alkyle en $C_1$-$C_{12}$, un alcényle en $C_3$-$C_7$, un cycloalkyle en $C_5$-$C_8$, un alcoxyalkyle en $C_3$-$C_{12}$, un alcényloxy en $C_5$-$C_{12}$, un dialkylamino-alkyle en $C_4$-$C_{12}$, un radical -$CH_2$-CH($R^4$)-OH, un phényle, un alkylphényle en $C_7$-$C_{12}$ ou un phénylalkyle en $C_7$-$C_{11}$, et $R^{10}$ représente l'hydrogène, un alkyle en $C_1$-$C_{12}$, un alcényle en $C_3$-$C_7$, un cycloalkyle en $C_5$-$C_8$, un alcoxyalkyle en $C_3$-$C_{12}$, un alcényloxyalkyle en $C_5$-$C_{12}$, un dialkylamino-alkyle en $C_4$-$C_{12}$, un alcanoyle en $C_2$-$C_{12}$, un alcénoyle en $C_3$-$C_{12}$, un radical -$CH_2$-CH($R^4$)-OH ou un radical phénylalkyle en $C_7$-$C_{11}$, ou $R^9$ et $R^{10}$ forment ensemble, et avec l'atome d'azote auquel ils sont liés, un hétérocycle à 5 ou 6 maillons, ou

(b) un radical de formule:

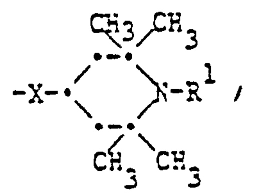

avec la condition qu'au moins l'un des symboles $R^1$, $R^2$, $R^3$, $R^5$, $R^6$, $R^8$, $R^9$ et $R^{10}$ représente un radical alcényle ou un radical alcénoyle.

13. Procédé selon la revendication 12 caractérisé en ce que, dans la formule I, au moins deux des symboles $R^1$, $R^2$, $R^3$, $R^5$, $R^6$, $R^8$, $R^9$ et $R^{10}$ représentent chacun un radical alcényle ou alcénoyle.

14. Procédé selon la revendication 12 caractérisé en ce que, dans la formule I, le substituant A ou chacun des substituants A et B représente un radical $R^8O$-ou ($R^9$)($R^{10}$)N-, les symboles $R^8$ et $R^9$ représentant chacun un alcényle en $C_3$-$C_7$.

15. Procédé selon la revendication 14 dans lequel A et B représentent chacun un radical $R^8O$- ou ($R^9$)($R^{10}$)N-, les symboles $R^8$ et $R^9$ représentant chacun un allyle.

16. Procédé selon la revendication 12 caractérisé en ce que, dans la formule I, le substituant A est un radical ($R^{9'}$)($R^{10'}$)N- dont le symbole $R^{9'}$ représente un alcényle en $C_3$-$C_7$ et le symbole $R^{10'}$ un alkyle en $C_1$-$C_{12}$, un cyclohexyle, un hydroxyéthyle, un benzyle, un alcanoyle en $C_2$-$C_{12}$ ou un alcénoyle en $C_3$-$C_5$.

17. Procédé selon la revendication 15 caractérisé en ce que, dans la formule I, les substituants A et B sont chacun un radical $R^8O$- ou ($R^9$)($R^{10}$)N-, les symboles $R^8$ et $R^9$ désignant chacun un allyle, X représente un radical -N($R^5$)- dans lequel $R^5$ désigne un radical de formule:

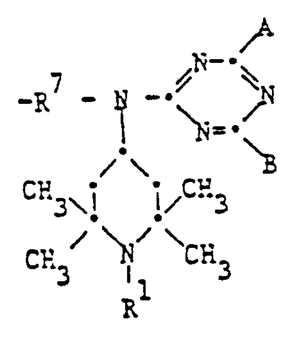

et $R^1$, $R^7$ et $R^{10}$ ont les significations qui leur ont été données à la revendication 12.

18. Procédé selon la revendication 12 caractérisé en ce que, dans la formule I, $R^1$ représente un alcényle en $C_3$-$C_7$ un phénylalkyle en $C_7$-$C_{11}$, un cyanométhyle, un alcanoyle en $C_2$-$C_{18}$, un alcénoyle en $C_3$-$C_{18}$ ou un radical -CON($R^2$)($R^3$).

19. Procédé selon la revendication 1, caractérisé en ce qu'on utilise, comme stabilisant, un composé répondant à la formule générale II:

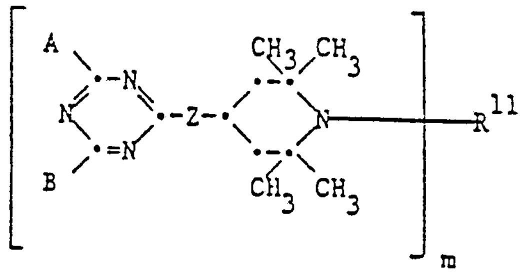

II

dans laquelle:

m est égal à 2, à 3 ou à 4,

$R^{11}$ est un radical de valence égale à m et représente un alkylène en $C_2$-$C_{12}$, un alcénylène en $C_4$-$C_8$, un xylylène ou un radical répondant à l'une des formules $-CH_2-CH(OH)-CH_2-$, $-CH_2-CH(OH)-CH_2-D-CH_2-$, $-CH(OH)-CH_2-$, $-[-CH_2-CH(OH)-CH_2-]-3T$ et $-[-CH_2-CH(OH)CH_2-]_4-Q$ dans lesquelles D représente un radical $-O-R^{12}-O-$ ou $-OOC-R^{13}COO-$, les symboles $R^{12}$ et $R^{13}$ représentant chacun un radical bivalent aliphatique, cycloaliphatique, aromatique ou araliphatique, T représente un radical aliphatique ou hétérocyclique trivalent et Q représente un radical aliphatique quadrivalent,

Z représente un radical bivalent -O- ou $-N(R^{14})-$, le symbole $R^{14}$ désignant l'hydrogène, un alkyle en $C_1$-$C_{12}$, un alcényle en $C_3$-$C_7$, un cyclohexyle, un hydroxyalkyle en $C_2$-$C_4$, un alcoxyalkyle en $C_3$-$C_{12}$, un alcényloxyalkyle en $C_5$-$C_{12}$, un dialkylamino-alkyle en $C_4$-$C_{12}$ ou un benzyle, et

A et B ont les significations qui leur ont été données à la revendication 12,

la molécule contenant au moins un radical alcényle ou alcénoyle.

20. Procédé selon la revendication 19 dans lequel la molécule contient au moins deux radicaux alcényles ou alcénoyles.

21. Procédé selon la revendication 19 caractérisé en ce que, dans la formule II, le substituant A est un radical $R^8O-$ ou $(R^9)(R^{10})N-$, les symboles $R^8$ et $R^9$ désignant chacun un alcényle en $C_3$-$C_7$ et $R^{10}$ ayant l'une des significations qui lui ont été données à la revendication 12.

22. Procédé selon la revendication 21 caractérisé en ce que, dans la formule II, A et B représentent chacun un radical $R^8O-$ ou $(R^9)(R^{10})-N-$, les symboles et $R^9$ désignant chacun un allyle.

23. Procédé selon la revendication 1 caractérisé en ce qu'on utilise, comme stabilisant, un composé répondant à la formule III:

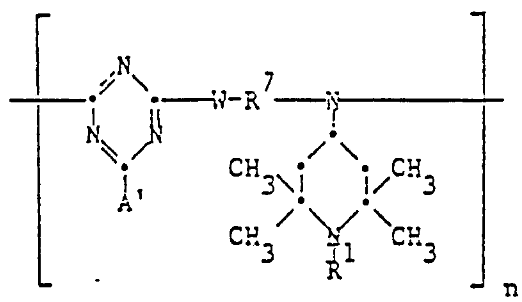

III

dans laquelle:

n désigne un nombre de 2 à 20,

A' représente un radical $R^8O-$ ou $(R^9)(R^{10})N-$, les symboles $R^8$ et $R^9$ désignant chacun un alcényle en $C_3$-$C_7$,

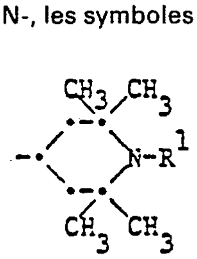

,

W représente un radical bivalent de formule -O- ou $-N(R^{16})-$, le symbole $R^{16}$ désignant l'hydrogène, un alkyle en $C_1$-$C_{12}$, un alcényle en $C_3$-$C_7$, un cyclohexyle ou un benzyle, ou représente un radical de formule:

et $R^1$, $R^7$ et $R^{10}$ ont les significations qui leur ont été données à la revendication 12.

24. Procédé selon la revendication 23 caractérisé en ce que, dans la formule III, le substituant A' est un radical allylamino ou diallylamino.

25. Procédé selon la revendication 1 caractérisé en ce qu'on utilise, comme stabilisant, un composé répondant à la formule IV:

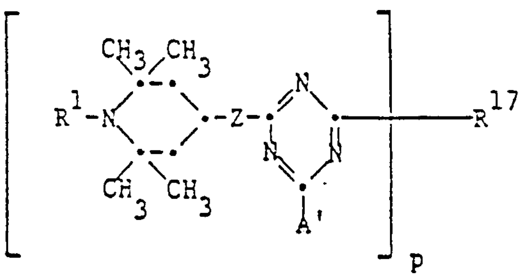

IV

dans laquelle $R^1$ a la signification donnée à la revendication 12, Z a la signification donnée à la revendication 20, A' a la signification donnée à la revendication 24, p représente un nombre égal à 2, à 3 ou à 4, et $R^{17}$ représente le radical p-valent d'un polyol ou d'une polyamine.

26. Procédé selon la revendication 25 caractérisé en ce que, dans la formule IV, le substituant A' est un radical allyloxy, allylamino ou diallylamino.

27. Procédé selon la revendication 25 caractérisé en ce que, dans la formule IV, le substituant A' est un radical $(R^9)(R^{10})N$- et $R^{10}$ représente un alkyle en $C_1$-$C_{12}$, un cyclohexyle, un hydroxyéthyle, un benzyle, un alcanoyle en $C_2$-$C_{12}$ ou un alcénoyle en $C_3$-$C_5$.

28. Procédé selon la revendication 25 caractérisé en ce que, dans la formule IV, $R^1$ représente un alcényle en $C_3$-$C_7$, un phénylalkyle en $C_7$-$C_{11}$, un cyanométhyle, un alcanoyle en $C_2$-$C_{18}$, un alcénoyle en $C_3$-$C_{18}$ ou un radical $-CON(R^2)(R^3)$ dans lequel $R^2$ et $R^3$ ont les significations qui leur ont été données à la revendication 1.

29. Composé répondant à la formule générale 1:

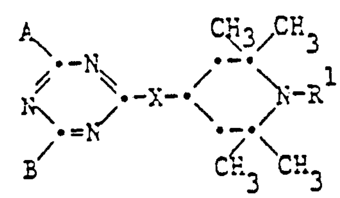

I

dans laquelle:

$R^1$ représente l'hydrogène, un alkyle en $C_1$-$C_{12}$, un alcényle en $C_3$-$C_7$, un phénylalkyle en $C_7$-$C_{11}$, un cyanométhyle, un alcanoyle en $C_2$-$C_{18}$ ou un alcénoyle en $C_3$-$C_{18}$, un radical $-CON(R^2)(R^3)$ ou un radical $-CH_2-CH(R^4)-OH$, dans lesquels $R^2$ représente un alkyle en $C_1$-$C_{12}$, un allyle, un cyclohexyle, un benzyle, un phényle ou un alkylphényle en $C_7$-$C_{12}$, $R^3$ représente l'hydrogène, un alkyle en $C_1$-$C_{12}$, un allyle ou un benzyle, ou $R^2$ et $R^3$ forment ensemble, et avec l'atome d'azote auquel ils sont liés, un hétérocycle à 5 ou 6 maillons, et $R^4$ représente l'hydrogène, un alkyle en $C_1$-$C_{12}$, un phényle, un alcoxyméthyle en $C_2$-$C_{13}$ ou un phénoxyméthyle,

X représente un radical bivalent répondant à l'une des formules: -O-, $-N(R^5)$-, $-NH-CH_2-CH_2-$ $NH-(CH_2)_2-O-$, $-NH(CH_2)_3-O-$ et $-N(R^5)-R^7-N(R^6)-$ dans lesquelles $R^5$ représente l'hydrogène, un alkyle en $C_1$-$C_{12}$, un alcényle en $C_3$-$C_7$, un cyclohexyle, un alcoxyalkyle en $C_3$-$C_{12}$, un alcényloxyalkyle en $C_5$-$C_{12}$, un dialkylaminoalkyle en $C_4$-$C_{12}$, un radical $-CH_2-CH(R^4)-OH$, un benzyle, un radical de formule:

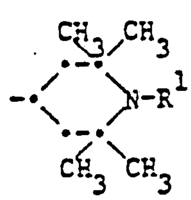

ou de formule:

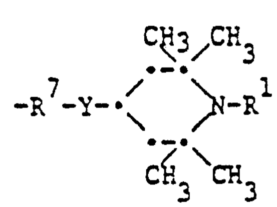
,

$R^6$ représente l'hydrogène, un alkyle en $C_1$-$C_{12}$, un alcényle en $C_3$-$C_7$, un cyclohexyle, un radical $-CH_2CH(R^4)-OH$ ou un radical de formule:

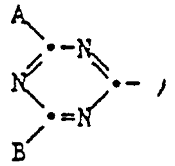

$R^7$ représente un alkylène en $C_2$-$C_{12}$, éventuellement interrompu par un, deux ou trois des radicaux -O- et $-N(R^6)-$, un cycloalkylène en $C_6$-$C_{14}$ ou un cycloalkylène-dialkylène, et Y représente un radical bivalent de formule -O- ou $-N(R^6)-$,

A représente un radical $(R^9)(R^{10'})N-$ dans lequel $R^{9'}$ représente un alcényle en $C_3$-$C_7$ et $R^{10'}$ un alkyle en $C_1$-$C_{12}$, un hydroxyéthyle, un cyclohexyle, un benzyle, un alcanoyle en $C_2$-$C_{12}$ ou un alcénoyle en $C_3$-$C_5$,

et

B représente soit:

(a) un radical $R^8O-$ ou $(R^9)(R^{10})-N-$, le symbole $R^8$ représentant un alkyle en $C_1$-$C_{12}$, un alcényle en $C_3$-$C_7$, un alcoxyalkyle en $C_3$-$C_{12}$, un dialkylamino-alkyle en $C_4$-$C_{12}$, un cyclohexyle, un benzyle, un phényle ou un alkylphényle en $C_7$-$C_{12}$, $R^9$ un alkyle en $C_1$-$C_{12}$, un alcényle en $C_3$-$C_7$, un cycloalkyle en $C_5$-$C_8$, un alcoxyalkyle en $C_3$-$C_{12}$, un alcényloxyalkyle en $C_5$-$C_{12}$, un dialkylamino-alkyle en $C_4$-$C_{12}$, un radical $-CH_2-CH(R^4)-OH$, un phényle, un alkylphényle en $C_7$-$C_{12}$ ou un phénylalkyle en $C_7$-$C_{11}$ et $R^{10}$ l'hydrogène un alkyle en $C_1$-$C_{12}$, un alcényle en $C_3$-$C_7$, un cycloalkyle en $C_5$-$C_8$, un alcoxyalkyle en $C_3$-$C_{12}$, un alcényloxyalkyle en $C_5$-$C_{12}$, un dialkylamino-alkyle en $C_4$-$C_{12}$, un alcanoyle en $C_2$-$C_{12}$, un alcénoyle en $C_3$-$C_{12}$, un radical $-CH_2CH(R^4)-OH$ ou un radical phénylalkyle en $C_7$-$C_{11}$, ou encore $R^9$ et $R^{10}$ forment ensemble, et avec l'atome d'azote auquel ils sont liés, un hétérocycle à 5 ou 6 maillons, soit

(b) un radical de formule

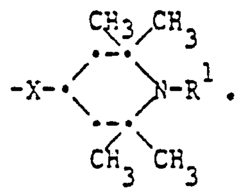

30. Composé répondant à la formule générale

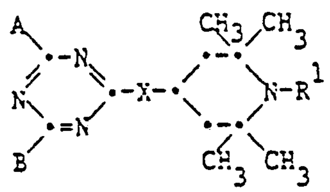 I

dans laquelle:

$R^1$ représente un alcényle en $C_3$-$C_7$, un phénylalkyle en $C_7$-$C_{11}$, un cyanométhyle, un alcanoyle en $C_2$-$C_{18}$, un alcénoyle en $C_3$-$C_{18}$, ou un radical $-CON(R^2)(R^3)$ dans lequel $R^2$ représente un alkyle en $C_1$-$C_{12}$, un allyle, un cyclohexyle, un benzyle, un phényle ou un alkylphényle en $C_7$-$C_{12}$, et $R^3$ l'hydrogène, un alkyle en $C_1$-$C_{12}$, un allyle ou un benzyle, ou encore $R^2$ et $R^3$ forment ensemble, et avec l'atome d'azote qui les porte, un hétérocycle à 5 ou 6 maillons,

X représente un radical bivalent de formule -O-,

$-N(R^5)-$, $-NH-CH_2-CH_2-$, $-NH-(CH_2)_2-O-$, $-NH-(CH_2)_3-O-$ ou $-N(R^5)-R\ -N(R^6)-$, où $R^5$ désigne l'hydrogène, un alkyle en $C_1$-$C_{12}$, un alcényle en $C_3$-$C_7$, un cyclohexyle, un alcoxyalkyle en $C_3$-$C_{12}$, un alcényloxyalkyle en $C_5$-$C_{12}$, un dialkylaminoalkyle en $C_4$-$C_{12}$, un radical $-CH_2-CH(R^4)-OH$, un benzyle, un radical de formule:

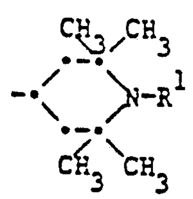

ou un radical de formule:

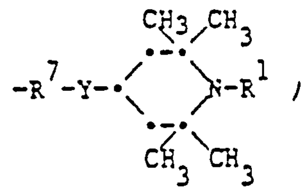

$R^6$ représente l'hydrogène, un alkyle en $C_1$-$C_{12}$, un alcényle en $C_3$-$C_7$, un cyclohexyle, un radical $-CH_2-CH(R^4)-OH$ ou un radical de formule:

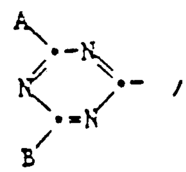

$R^7$ représente un alkylène en $C_2$-$C_{12}$, éventuellement interrompu par un, deux ou trois des radicaux -O- et $-N(R^6)-$, un cycloalkylène en $C_6$-$C_{14}$ ou un cycloalkylène-dialkylène, $R^4$ a la signification qui lui a été donnée à la revendication 29, et Y représente un radical bivalent de formule -O- ou $-N(R^6)-$, et

A et B représentent chacun, indépendamment l'un de l'autre:

(a) un radical répondant à l'une des formules $R^8O$- ou $(R^9)(R^{10})N$- dans lesquelles $R^8$ représente un alkyle en $C_1$-$C_{12}$, un alcényle en $C_3$-$C_7$, un cyclohexyle, un benzyle, un phényle ou un alkylphényle en $C_7$-$C_{12}$, $R^9$ un alkyle en $C_1$-$C_{12}$, un alcényle en $C_3$-$C_7$, un cycloalkyle en $C_5$-$C_8$, un alcoxyalkyle en $C_3$-$C_{12}$, un alcényloxyalkyle en $C_5$-$C_{12}$, un radical $-CH_2-CH(R^4)-OH$, un phényle, un alkylphényle en $C_7$-$C_{12}$ ou un phénylalkyle en $C_7$-$C_{11}$, et $R^{10}$ l'hydrogène, un alkyle en $C_1$-$C_{12}$, un alcényle en $C_3$-$C_7$, un cycloalkyle en $C_5$-$C_8$, un alcoxyalkyle en $C_3$-$C_{12}$, un alcényloxyalkyle en $C_5$-$C_{12}$, un alcanoyle en $C_2$-$C_{12}$, un alcénoyle en $C_3$-$C_{12}$, un radical $-CH_2-CH(R^4)-OH$ ou un phénylalkyle en $C_7$-$C_{11}$, ou encore $R^9$ et $R^{10}$ forment ensemble, et avec l'atome d'azote auquel ils sont liés, un hétérocycle à 5 ou 6 maillons, ou

(b) un radical de formule:

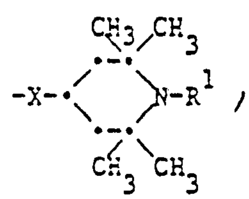

au moins l'un des symboles $R^1$, $R^2$, $R^3$, $R^5$, $R^6$, $R^8$, $R^9$ et $R^{10}$ représentant un radical alcényle ou alcénoyle.

31. Composé répondant à la formule II:

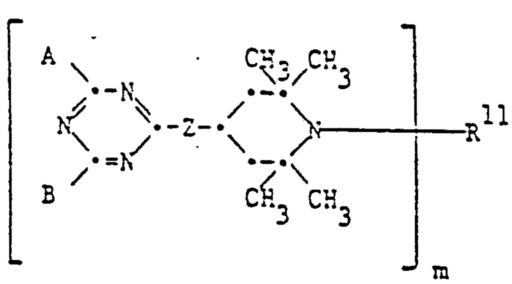

II

dans laquelle:

m désigne un nombre égal à 2, à 3 ou à 4,

$R^{11}$ est un radical de valence égale à m et représente un alkylène en $C_2$-$C_{12}$, un alcénylène en $C_4$-$C_8$, un xylylène ou un radical répondant à l'une des formules $-CH_2-CH(OH)-CH_2-$, $-CH_2-CH(OH)-CH_2-D-CH_2-$, $-CH(OH)-$

$CH_2$-, -[-$CH_2$-CH(OH)-$CH_2$-]-$_3$-T et -[-$CH_2$-CH(OH)$CH_2$-]-$_4$ Q dans lesquelles D représente un radical -O-$R^{12}$ -O- ou -OOC-$R^{13}$COO-, les symboles $R^{12}$ et $R^{13}$ représentant chacun un radical bivalent aliphatique, cycloaliphatique, aromatique ou araliphatique, T représente un radical aliphatique ou hétérocyclique trivalent et Q représente un radical aliphatique quadrivalent,

Z représente un radical bivalent -O- ou -N($R^{14}$)-, le symbole $R^{14}$ désignant l'hydrogène, un alkyle en $C_1$-$C_{12}$, un alcényle en $C_3$-$C_7$, un cyclohexyle, un hydroxyalkyle en $C_2$-$C_4$, un alcoxyalkyle en $C_3$-$C_{12}$, un alcényloxyalkyle en $C_5$-$C_{12}$, un dialkylamino-alkyle en $C_4$-$C_{12}$ ou un benzyle,

A et B représentent chacun, indépendamment l'un de l'autre:

(a) un radical répondant à l'une des formules $R^8$O- et ($R^9$)($R^{10}$)-N- dans lesquelles $R^8$ représente un alkyle en $C_1$-$C_{12}$, un alcényle en $C_3$-$C_7$, un cyclohexyle, un benzyle, un phényle ou un alkylphényle en $C_7$-$C_{12}$, $R^9$ un alkyle en $C_1$-$C_{12}$, un alcényle en $C_3$-$C_7$, un cycloalkyle en $C_5$-$C_8$, un alcoxyalkyle en $C_3$-$C_{12}$, un alcényloxyalkyle en $C_5$-$C_{12}$, un radical -$CH_2$-CH($R^4$)-OH, un phényle, un alkylphényle en $C_7$-$C_{12}$ ou un phénylalkyle en $C_7$-$C_{11}$, et $R^{10}$ l'hydrogène, un alkyle en $C_1$-$C_{12}$, un alcényle en $C_3$-$C_7$, un cycloalkyle en $C_5$-$C_8$, un alcoxyalkyle en $C_3$-$C_{12}$, un alcényloxyalkyle en $C_5$-$C_{12}$, un alcanoyle en $C_2$-$C_{12}$, un alcénoyle en $C_3$-$C_{12}$, un radical -$CH_2$-CH($R^4$)-OH ou un phénylalkyle en $C_7$-$C_{11}$, ou encore $R^9$ et $R^{10}$ forment ensemble, et avec l'atome d'azote auquel ils sont liés, un hétérocycle à 5 ou 6 maillons, ou

(b) un radical de formule:

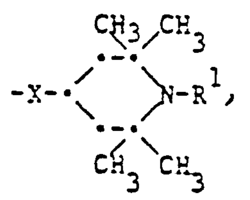

la molécule contenant au moins un radical alcényle ou alcénoyle.

32. Composé selon la revendication 31 dans lequel A et B représentent chacun un radical répondant à l'une des formules $R^8$O- et ($R^9$)($R^{10}$)N- dans lesquelles $R^8$ et $R^9$ désignent chacun un allyle.

33. Composé répondant à la formule III:

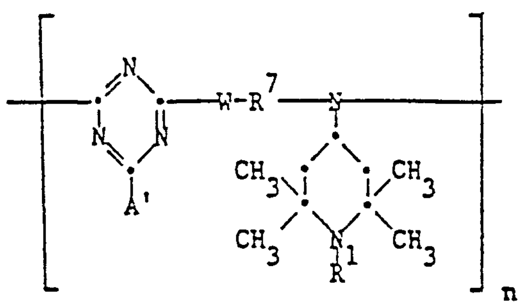

III

dans laquelle:

n désigne un nombre de 2 à 20,

A' représente un radical $R^8$O- ou ($R^9$)$R^{10}$)N-, les symboles $R^8$ et $R^9$ désignant chacun un alcényle en $C_3$-$C_7$ et $R^{10}$ l'hydrogène, un alkyle en $C_1$-$C_{12}$, un alcényle en $C_3$-$C_7$, un cycloalkyle en $C_5$-$C_8$, un alcoxyalkyle en $C_3$-$C_{12}$, un alcényloxyalkyle en $C_5$-$C_{12}$, un alcanoyle en $C_2$-$C_{12}$, un alcénoyle en $C_3$-$C_{12}$, un radical -$CH_2$-CH($R^4$)-OH ou un phénylalkyle en $C_7$-$C_{12}$,

W représente un radical bivalent de formule -O- ou -N($R^{16}$)-, où $R^{16}$ représente l'hydrogène, un alkyle en $C_1$-$C_{12}$, un cyclohexyle, un benzyle ou un radical de formule:

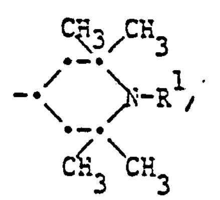

$R^7$ représente un alkylène en $C_2$-$C_{12}$ qui peut être interrompu par un, deux ou trois des radicaux -O- et -N($R^6$)-, un cycloalkylène en $C_6$-$C_{14}$ ou un cycloalkylène-dialkylène, le symbole $R^6$ désignant l'hydrogène, un alkyle en $C_1$-$C_{12}$, un cyclohexyle ou un radical -$CH_2$-CH($R^4$)-OH,

et

$R^1$ représente l'hydrogène, un alkyle en $C_1$-$C_{12}$, un alcényle en $C_3$-$C_7$, un phénylalkyle en $C_7$-$C_{11}$, un cyanométhyle, un alcanoyle en $C_2$-$C_{18}$, un alcénoyle en $C_3$-$C_{18}$, un radical -CON($R^2$)($R^3$) ou un radical -$CH_2$-CH($R^4$)-OH, le symbole $R^2$ représentant un alkyle en $C_1$-$C_{12}$, un allyle, un cyclohexyle, un benzyle, un phényle ou un alkylphényle en $C_7$-$C_{12}$, $R^3$ l'hydrogène, un alkyle en $C_1$-$C_{12}$, un allyle ou un benzyle, ou $R^2$ et $R^3$ forment ensemble, et avec l'atome d'azote auquel ils sont liés, un hétérocycle à 5 ou 6 maillons, et $R^4$ représentant l'hydrogène, un alkyle en $C_1$-$C_{12}$, un phényle, un alcoxyméthyle en $C_2$-$C_{13}$ ou un phénoxyméthyle.

34. Composé selon la revendication 33 dans lequel A' représente un radical allylamino ou diallylamino.

35. Composé répondant à la formule IV:

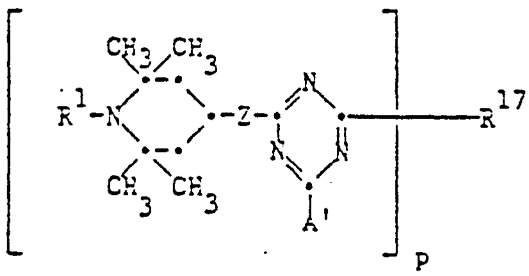

IV

dans laquelle $R^1$ a la signification donnée à la revendication 29, Z a la signification donnée à la revendication 31, A' représente un radical ($R^9$)($R^{10}$)N- dans lequel $R^9$ désigne un alcényle en $C_3$-$C_7$ et $R^{10}$ un alkyle en $C_1$-$C_{12}$, un cyclohexyle, un hydroxyéthyle, un benzyle, un alcanoyle en $C_2$-$C_{12}$ ou un alcénoyle en $C_3$-$C_5$, p est égal à 2, à 3 ou à 4, et $R^{17}$ représente le radical, de valence égale à p, d'un polyol ou d'une polyamine.

36. Composé de formule IV dans lequel $R^1$ représente un alcényle en $C_3$-$C_7$, un phénylalkyle en $C_7$-$C_{11}$, un cyanométhyle, un alcanoyle en $C_2$-$C_{18}$, un alcénoyle en $C_3$-$C_{18}$ ou un radical -CON($R^2$)($R^3$), les symboles $R^2$ et $R^3$ ayant les significations données à la revendication 33, A' représente un radical $R^8$O- ou ($R^9$)($R^{10}$)N-, les symboles $R^8$ et $R^9$ représentant chacun un alcényle en $C_3$-$C_7$, $R^{10}$ l'hydrogène, un alkyle en $C_1$-$C_{12}$, un alcényle en $C_3$-$C_7$, un cycloalkyle en $C_5$-$C_8$, un alcoxyalkyle en $C_3$-$C_{12}$, un alcényloxyalkyle en $C_5$-$C_{12}$, un alcanoyle en $C_2$-$C_{12}$, un alcénoyle en $C_3$-$C_{12}$, un radical -$CH_2$-CH($R^4$)-OH ou un phénylalkyle en $C_7$-$C_{11}$, et $R^4$ l'hydrogène, un alkyle en $C_1$-$C_{12}$, un phényle, un alcoxyméthyle en $C_2$-$C_{13}$ ou un phénoxyméthyle, Z a la signification qui lui a été donnée à la revendication 35, p désigne un nombre égal à 2, à 3 ou à 4, et $R^{17}$ représente le radical, de valence égale à p, d'un polyol ou d'une polyamine.